(19) Europäisches Patentamt
European Patent Office
Office européen des brevets

(11) **EP 2 147 193 B1**

(12) **FASCICULE DE BREVET EUROPEEN**

(45) Date de publication et mention
de la délivrance du brevet:
**23.10.2013 Bulletin 2013/43**

(21) Numéro de dépôt: **08805672.6**

(22) Date de dépôt: **21.04.2008**

(51) Int Cl.:
*F02C 1/04* (2006.01)      *F01K 3/12* (2006.01)
*F01K 25/00* (2006.01)     *F02C 6/14* (2006.01)

(86) Numéro de dépôt international:
**PCT/FR2008/050712**

(87) Numéro de publication internationale:
**WO 2008/148962 (11.12.2008 Gazette 2008/50)**

(54) **INSTALLATION ET PROCÉDÉS DE STOCKAGE ET RESTITUTION D'ÉNERGIE ÉLECTRIQUE**

ANLAGE UND VERFAHREN ZUR SPEICHERUNG UND WIEDERGEWINNUNG ELEKTRISCHER ENERGIE

INSTALLATION AND METHODS FOR STORING AND RECOVERING ELECTRIC ENERGY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **11.05.2007 FR 0755010**

(43) Date de publication de la demande:
**27.01.2010 Bulletin 2010/04**

(73) Titulaire: **Saipem SA**
**78180 Montigny-le-Bretonneux (FR)**

(72) Inventeur: **RUER, Jacques**
**F-78230 Le Pecq (FR)**

(74) Mandataire: **Domange, Maxime et al**
**Cabinet Beau de Lomenie**
**232, avenue du Prado**
**13295 Marseille Cedex 08 (FR)**

(56) Documents cités:
**WO-A-2006/072185     JP-A- 2004 138 043**
**US-A- 3 818 697       US-A- 4 094 148**

**Description**

La présente invention concerne une installation de stockage et restitution d'énergie électrique apte à stocker plusieurs dizaines, voire plusieurs milliers de MWh, ainsi que des procédés de stockage d'énergie électrique sous forme d'énergie thermique dans lequel on utilise une installation selon l'invention et un procédé de restitution d'une énergie électrique à partir d'une énergie thermique stockée par un procédé selon l'invention.

La présente invention concerne le stockage d'énergie à haute température et plus particulièrement le stockage d'énergie électrique, en vue de la restituer sur le réseau électrique lors des pointes de consommation.

La production de courant électrique est réalisée en général par des centrales qui utilisent divers carburants pour produire l'énergie, tel le gaz, le pétrole, le charbon ou le lignite. Un autre moyen consiste à utiliser du combustible nucléaire pour produire de la chaleur qui sera alors transformée en énergie électrique dans des turbines à vapeur à haute pression.

On connaît aussi les énergies renouvelables qui participent pour une part très variable à la production d'électricité selon les pays. On peut citer entre autres l'énergie hydraulique des barrages, les éoliennes, les hydroliennes qui puisent leur énergie des courants marins, ainsi que divers dispositifs qui récupèrent l'énergie de la houle marine, ou encore l'énergie solaire.

Si les installations qui produisent de l'électricité à partir de combustibles ou à partir d'eau retenue dans des barrages peuvent fonctionner de manière continue à puissance nominale ou maximale durant de très longues périodes, les énergies renouvelables sont caractérisées par un fonctionnement intermittent, et leur intégration dans un réseau ne permet en général que de délester une partie des centrales conventionnelles, certaines d'entre elles étant alors soit mise en régime ralenti, soit encore simplement arrêtées, en attente d'une demande de puissance de la part du réseau.

On connaît les diverses techniques utilisant des turbines pour produire de l'énergie mécanique à partir de carburants, tel le gaz ou le pétrole, qui consistent à  comprimer un comburant, en général de l'air, puis de le mélanger à un carburant, puis de l'enflammer dans une chambre de combustion, et enfin le diriger vers une turbine de détente en vue de récupérer l'énergie mécanique produite, le compresseur et la turbine de détente étant en général montés en ligne sur le même arbre mécanique. Dans ce type de machine tournante, on recherche un rendement maximal, lequel est fonction du niveau de température d'entrée de la turbine de détente. Les limites de température de fonctionnement sont dues à la tenue en température des aubes de la turbine de détente, en raison du caractère très agressif des gaz de combustion à très haute température, ces derniers étant en général constitués de $CO_2$, de $NOx$ et autre composés agressifs vis-à-vis des alliages constituant les aubes de la turbine.

On connaît aussi les turbines à vapeur qui sont utilisées dans les centrales nucléaires pour convertir l'énergie de l'eau portée à très haute température sous forme de vapeur, en énergie mécanique, puis en énergie électrique au sein de génératrices accouplées en bout d'arbre des turbines à vapeur. Ces turbines à vapeur fonctionnent en circuit fermé avec pour fluide caloporteur, de l'eau en phase vapeur en amont de la turbine et de l'eau liquide en aval de ladite turbine.

On a longtemps recherché à stocker l'énergie, de manière à pouvoir en disposer de manière quasi instantanée lors de pointes de consommation. De nombreuses techniques ont été développées et on peut citer, entre autres, les accumulateurs électriques, en général accumulateurs au plomb, ou le pompage d'eau dans un barrage en altitude, en vue d'être returbinée lors des pointes de demande d'énergie.

Le stockage d'énergie au sein de batteries électrique au plomb est valable pour les petites ou moyennes capacités, mais lorsqu'il faut stocker l'équivalent d'une tranche de centrale nucléaire, c'est-à-dire environ 1200MW sur des périodes de 24 ou 36 heures, les installations requises deviennent alors gigantesques et totalement irréalistes.

Si les barrages constituent un excellent moyen de stocker l'énergie, les sites sont malheureusement en nombre limités et de plus le stockage de très grandes quantités d'énergie nécessite de mobiliser des quantités énormes d'eau qui doivent alors être prélevées sur les quotas disponibles, pour être ensuite relâchées à des périodes ou l'on n'a pas besoin de ces quantités d'eau, par exemple pour l'irrigation, l'eau étant alors plus ou moins gaspillée. Plusieurs sites sont cependant constitués d'un réservoir haut et d'un réservoir bas, en général des lacs de grande capacité et, en période de stockage, on pompe le contenu du lac inférieur vers le lac supérieur, pour le turbiner en sens inverse dès lors que des pointes de consommation nécessitent des appoints de puissance sur le réseau électrique.

Un autre moyen consiste à stocker l'énergie sous forme d'air comprimé, pour la retransformer ensuite en énergie mécanique par le biais de moteurs à pistons, à palettes ou encore de turbines.

On connaît le brevet WO-2005-108758 qui décrit un mode de stockage d'énergie sous forme de chaleur dans une enceinte sous-terraine, la chaleur étant engendrée par la compression d'air initialement à pression atmosphérique et à température ambiante, la température au sein du stockage enterré étant d'environ 700°C. Dans cette application, le gaz, de l'air, circule en circuit ouvert, depuis l'atmosphère libre vers la caverne lors de la phase de stockage, et, depuis la caverne vers l'atmosphère libre lors de la phase de restitution de l'énergie.

Dans un autre domaine technique, on connaît les régénérateurs couramment employés dans les industries du feu, c'est-à-dire dans les hauts fourneaux, dans l'industrie de la céramique et de la terre cuite, dans l'industrie du verre et les cimenteries, qui consistent à envoyer les gaz brûlés chauds dans des grandes tours pour réchauffer des masses réfractaires qu'elles comprennent de manière à récupérer les calories des gaz, avant de relâcher lesdits gaz dans l'atmosphère. Lorsque la température maximale est atteinte au sein des matériaux réfractaires, on arrête la circulation de gaz chaud et l'on envoie à contre courant de l'air frais qui se réchauffe alors au contact des matériaux réfractaires pour être enfin dirigé vers l'entrée des fours, ou au niveau de brûleurs. Ces dispositions permettent de réduire radicalement les pertes de chaleur au sein de processus industriels gros consommateurs en énergie.

WO 2006/0721185 décrit une installation de stockage et restitution d'énergie électrique comprenant des réservoirs de chaleur constitués de matériau solide traversés par de l'eau ou de la vapeur d'eau.

Le problème posé est de stocker l'énergie électrique de centrales conventionnelles, telles des centrales à charbon, à gaz, à pétrole, ou encore des centrales nucléaires, en vue de pouvoir la restituer très rapidement et en quantité considérable, dans le réseau électrique pendant les périodes de pointe lorsque la demande en énergie dépasse la capacité de production.

De même dans le cas des énergies renouvelables, telles les éoliennes, les hydroliennes, le problème est de pouvoir stocker des quantités d'énergie considérables en période de vent ou de courants importants, correspondant à des surplus de production, en vue de restituer cette énergie en phase de déficit de production, c'est à dire lorsque vent ou courant ne permettent pas de maintenir le niveau de production d'énergie à un seuil minimum.

Pour ce faire, la présente invention consiste essentiellement à stocker des quantités considérables d'énergie électrique sous forme de chaleur au sein de masses de produits réfractaires, le fluide permettant le transfert d'énergie étant un gaz, de préférence un gaz neutre, tel l'argon, puis de restituer cette énergie potentielle thermique stockée, sous forme d'énergie électrique.

Plus précisément, la présente invention fournit une installation de stockage et restitution d'énergie électrique caractérisée en ce qu'elle comprend :

- deux première et seconde enceintes contenant un gaz et des premier et second matériaux réfractaires poreux aptes à transférer des calories thermiques par contact entre lesdits matériaux réfractaires poreux et un gaz circulant à travers lesdites enceintes, et
- un circuit fermé de canalisations permettant la circulation d'un gaz traversant successivement chacune des deux enceintes d'une extrémité à l'autre, et
- des moyens de compression et des moyens de détente du gaz circulant dans lesdites canalisations entre chacune des extrémités d'une enceinte reliée à une extrémité de l'autre enceinte, et
- de préférence, des premiers moyens de chauffages de gaz aptes à chauffer le gaz circulant dans ladite seconde enceinte, et
- de préférence encore, des moyens de refroidissement de gaz circulant entre une des extrémités de la première enceinte et desdits moyens de compression et moyens de détente, aptes à refroidir du gaz sortant de ladite première enceinte à cette extrémité avant d'être détendu dans lesdits moyens de détente ou respectivement du gaz entrant dans ladite première enceinte après avoir été compressé par desdits moyens de compression.

On comprend que les deux dites nièmes canalisations supérieures (ou inférieures) peuvent être soit deux canalisations parallèles assurant la jonction entre les dites turbine / compresseur et une même enceinte soit l'une des deux comporte une canalisation en dérivation de l'autre avant les dites turbine/ compresseur.

Plus particulièrement, selon l'invention une installation de stockage et restitution d'énergie électrique comprend :

- A) une première enceinte calorifugée remplie d'un premier matériau réfractaire poreux apte à être traversée par un gaz circulant à travers la dite première enceinte entre 2 extrémités supérieure et inférieure de la dite première enceinte, et
- B) une seconde enceinte calorifugée remplie d'un second matériau réfractaire poreux apte à être traversée par un gaz circulant à travers la dite seconde enceinte entre 2 extrémités supérieure et inférieure de la dite seconde enceinte, et
- C) des canalisations calorifugées permettant la circulation de gaz en circuit fermé entre les 2 enceintes comprenant des premières et secondes canalisations supérieures entre les extrémités supérieures des deux enceintes et des premières et secondes canalisations inférieures entre les extrémités inférieures des deux enceintes, et
- D) de préférence des premiers moyens de chauffage de gaz aptes à chauffer du gaz à l'intérieur de la dite seconde enceinte, et
- E) des premiers moyens de compression de gaz comprenant un premier moteur électrique apte à être alimenté par une énergie électrique à stocker pour actionner un premier compresseur apte à compresser un gaz provenant de la dite extrémité supérieure de la seconde enceinte par une dite seconde canalisation supérieure pour l'envoyer à la dite extrémité supérieure de la première enceinte par une dite première canalisation supérieure, et
- F) des premiers moyens de détente de gaz comprenant une première turbine, apte à détendre le gaz provenant de la dite extrémité inférieure de la première enceinte par une première canalisation inférieure pour l'envoyer à la dite extrémité inférieure de la seconde enceinte par une seconde canalisation inférieure, et

- G) des seconds moyens de compression de gaz comprenant apte à compresser le gaz provenant de la dite extrémité inférieure de la seconde enceinte par une autre seconde canalisation inférieure pour l'envoyer à ladite extrémité inférieure de la première enceinte par une autre première canalisation inférieure, et

- H) des seconds moyens de détente de gaz comprenant une seconde turbine apte à détendre le gaz provenant de ladite extrémité supérieure de la première enceinte par une autre premières canalisation supérieure pour l'envoyer à ladite extrémité supérieure de la seconde enceinte par une autre seconde canalisation supérieure, lesdits seconds moyens de détente étant aptes à actionner un générateur électrique apte à restituer de l'énergie électrique, et

- I) des moyens de refroidissement de gaz de préférence un échangeur thermique aptes à refroidir du gaz circulant dans desdites premières canalisations inférieures entre d'une part l'extrémité inférieure de la première enceinte et d'autre part les sortie et entrée desdits second compresseur et respectivement première turbine.

De préférence, l'installation de stockage et restitution de l'énergie électrique selon l'invention comprend des seconds moyens de chauffage de gaz aptes à chauffer le gaz circulant dans une dite seconde canalisation supérieure entre l'extrémité supérieure de ladite seconde enceinte et le dit premier compresseur.

Selon d'autres caractéristiques avantageuses de l'installation selon l'invention :

- ladite première turbine est apte à être actionnée par ledit premier compresseur auquel elle est couplée mécaniquement,
- ladite seconde turbine est couplée à un moteur électrique auxiliaire apte à l'actionner,
- ledit second compresseur est actionné par la dite seconde turbine à laquelle il est couplé mécaniquement.

Dans un mode préféré de réalisation, l'installation selon l'invention est remplie d'un gaz neutre, de préférence de l'argon.

Comme explicité plus loin, ce gaz argon est avantageux car il s'agit d'un gaz permanent et neutre, donc non corrosif pour les canalisations, gaz monoatomique présentant l'avantage de s'échauffer facilement, donc un taux de compression limité, et un coût réduit compte tenu de son abondance.

Dans des modes de réalisation particuliers, l'installation présente les caractéristiques selon lesquelles :

- lesdits première enceinte et premier matériau réfractaire poreux sont capables de résister à une température T1 d'au moins 750°C, de préférence d'au moins 750 à 2000°C, de préférence encore de 1000 à 1500°C et
- ladite seconde turbine est dimensionnée pour détendre un gaz à la dite température T1 tandis que ladite première turbine, de moindre capacité que la seconde turbine, est dimensionnée pour détendre un gaz de la température ambiante T0 à une température T3 de -80 à -20°C, et
- lesdits seconde enceinte et second matériau réfractaire poreux sont capables de résister à une température T2 d'au moins 400°C, de préférence d'au moins 400°C à 1000°C, de préférence encore de 500 à 700°C, et
- ledit premier compresseur est dimensionné pour compresser un gaz à la dite température T2 tandis que ledit second compresseur, de moindre capacité que le premier compresseur, est dimensionné pour compresser un gaz de la température T3 de -80 à -20°C à la température ambiante.

Plus particulièrement encore, ledit premier compresseur est apte à délivrer un débit volumique plus important que la dite première turbine et la dite seconde turbine est apte à délivrer un débit volumique plus important que ledit second compresseur et lesdits premier compresseur et seconde turbine sont réalisés en carbone.

De préférence, lesdits matériaux réfractaires présentent une capacité calorifique volumique intrinsèque d'au moins 2000 kJ x m$^{-3}$ x K$^{-1}$, de préférence encore au moins 2800 kJ x m$^{-3}$ x K$^{-1}$.

Avantageusement, lesdits premier et second matériaux réfractaires poreux présentent une porosité de 20 à 60 %.

Plus particulièrement, lesdits premier et second matériaux réfractaires poreux sont constitués de briques poreuses assemblées les unes contre les autres, de préférence traversées de perforations cylindriques disposées parallèlement dans une même direction longitudinale que la dite enceinte dans laquelle elles sont assemblées, les dites perforations étant de préférence encore de diamètre 5 à 20 mm.

Dans des modes de réalisation particuliers, lesdits premier et second matériaux réfractaires poreux sont constitués d'argile cuite, ou de produits céramique à teneurs élevées en composés choisis parmi les oxydes, magnésie, alumine et chaux.

On peut citer comme matériaux réfractaires les chamotte, magnésie, dolomie, mulite mais aussi carbone.

Plus particulièrement, ledit premier matériau réfractaire poreux est constitué d'argile de seconde cuisson ou chamotte, et ledit second matériau réfractaire poreux est constitué d'argile de première cuisson.

Dans un mode de réalisation particulier, lesdites première et seconde enceintes ont un volume chacune d'au moins 5000 m3, de préférence de 10000 à 45000 m3.

La présente invention fournit également un procédé de stockage d'énergie électrique sous forme d'énergie thermique dans lequel on utilise une installation selon l'invention caractérisée en ce que, après une étape initiale de préchauffage du gaz de ladite deuxième enceinte que l'on chauffe à température $T_2$, ladite installation étant remplie d'un gaz permanent, initialement à température ambiante $T_0$ on réalise les étapes successives dans lesquelles :

1) le gaz sortant de l'extrémité supérieure de la seconde enceinte à une température $T_2$ est chauffé à une température $T_1$ supérieure à une température $T_2$ par compression dans un dit premier compresseur avant d'être envoyé à l'extrémité supérieure de ladite première enceinte, dans laquelle il s'établit une pression P1 supérieure à la pression P2 de la deuxième enceinte, ledit premier compresseur étant entraîné par un premier moteur électrique alimenté par l'énergie électrique à stocker, et

2) le gaz traverse de part en part ladite première enceinte entre ladite extrémité supérieure et sa dite extrémité inférieure et il ressort de ladite extrémité inférieure de la première enceinte à une température ambiante T0 ou une température T'1 supérieure à T0 mais inférieure à T2, et

3) le gaz est ensuite refroidi le cas échéant à une température ambiante T0 grâce à desdits moyens de refroidissement de gaz de préférence du type échangeur de chaleur, en aval de la sortie de l'extrémité inférieure de la première enceinte, et

4) le gaz est ensuite détendu à travers une dite première turbine, de préférence entraînée par ledit premier compresseur, à ladite pression P2 de la seconde enceinte inférieure à la pression P1, le gaz se trouve ainsi refroidi à une température T3 inférieure à T0 avant d'entrer dans ladite seconde enceinte par son extrémité inférieure, et

5) on fait circuler le gaz à travers ladite seconde enceinte entre lesdites extrémités inférieure et supérieure de la deuxième enceinte, ce qui a pour effet d'augmenter le volume de matériau réfractaire de la partie inférieure de ladite seconde enceinte refroidie à la température T3, et de diminuer celui de sa partie supérieure à la température T2 ou T'2 inférieure à T2 mais supérieure à T0 et T'1, et si nécessaire, le cas échéant on réchauffe à la température T2 le gaz sortant de la seconde enceinte à la température T'2 ,à l'aide de seconds moyens de chauffage de gaz et

6) on réitère les étapes 1) à 5) ci-dessus jusqu'à ce que la partie supérieure de la première enceinte réchauffée à la température T1 occupe au moins 80% du volume de ladite première enceinte, et que la partie inférieure de la seconde enceinte refroidie à la température T3 occupe au moins 80% du volume de la seconde enceinte.

On comprend que à chaque étape 2) lorsque le gaz arrive à la température T1 à l'extrémité supérieure de la première enceinte laquelle se trouve initialement entièrement à la température T0, et que le gaz descend depuis l'extrémité supérieure vers l'extrémité inférieure de la première enceinte, le passage du gaz dans le dit premier matériau réfractaire poreux a pour effet que le gaz cède ses calories au dit premier matériau réfractaire dans la partie supérieure de la première enceinte laquelle se trouve alors réchauffée à la température T1 tandis que sa partie inférieure non réchauffée ou moins réchauffée est à une température T'1 entre T0 et T1, en pratique entre T0 et T2. Au fur et à mesure des passages successifs du gaz qui circule en boucle fermée, le front ou plutôt la couche de transition thermique entre les partie supérieure chaude et partie inférieure froide de la première enceinte progresse vers le bas et la partie supérieure à la température T1 occupe un volume de plus en plus important. Parallèlement, à l'étape 5), le gaz arrive à une température froide T3 en bas la deuxième enceinte ce qui a pour effet de céder des frigories au dit second matériau réfractaire poreux et donc refroidir la partie inférieure de la seconde enceinte laquelle passe de la température T2 à la température T3. Et, au fur et à mesure des différents passages le front ou plutôt la couche de transition thermique entre les partie supérieure chaude et partie inférieure froide de la seconde enceinte progresse vers le haut et la partie inférieure à la température T3 occupe un volume de plus en plus important.

L'énergie électrique E1 mise en oeuvre pour alimenter en énergie le premier compresseur est donc stockée sous forme d'énergie thermique en calories dans la première enceinte et frigories dans la deuxième enceinte, cette énergie est facteur du gradient T1-T3.

De préférence, on interrompt le stockage de manière à ce que la partie inférieure de la première enceinte à ladite température T'1 représente au moins 10% du volume de la première enceinte, de préférence 10 à 20% du volume de la première enceinte, et/ou la partie supérieure de la seconde enceinte à la température T2 représente moins de 20%, de préférence de 10 à 20% du volume de ladite seconde enceinte.

Selon d'autres caractéristiques particulières avantageuses de la présente invention, on met en oeuvre desdits matériaux réfractaires dont les propriétés et les masses sont telles que:

- lesdites températures T1 et T2 sont telles que T1/T2=1,5 à 3 et T1/T0 est supérieur à 2, de préférence supérieur à 3 et de préférence encore inférieur à 6 et P1/P2 est de 2 à 4, et
- T1 est de 750 °C à 2000 °C, de préférence de 1000 à 1500°C, et T2 est de 400 à 1000 °C, de préférence de 500 à 700 °C, et

- la pression P1 est de 2 à 4 bar absolu ($2.10^5$ à $4.10^5$ Pa) et P2 est de 0,5 à 1,5 bar absolu ($0.5.10^5$ à $1.5.10^5$ Pa), et
- T0 est de 10° à 50°C et T3 est de -80 °C à -20 °C, T'1 étant le cas échéant de 20° à 150°C.

Avantageusement, l'on stocke une quantité d'énergie électrique de 20MWh à 10.000MWh.

La présente invention fournit également un procédé de restitution d'une énergie électrique à partir d'une énergie thermique stockée par un procédé selon l'invention telle que définie ci-dessus, caractérisé en ce que, après une phase initiale de démarrage dans laquelle on actionne ledit second compresseur et dite deuxième turbine avec ledit moteur électrique auxiliaire, au cours de laquelle phase initiale on établit un gradient de pression entre la pression P'1 de la première enceinte et une pression P'2 inférieure à P'1 de la deuxième enceinte, tel que P'1 est supérieure à P'2 , de préférence P'1 étant supérieur à P1 et P'2 étant inférieur à P2 ,on réalise les étapes successives dans lesquelles :

1) le gaz sortant par l'extrémité supérieure de la première enceinte à la dite température T1 est détendu et refroidi à la température T2 à travers la deuxième turbine, et ladite deuxième turbine actionne un dit générateur d'électricité permettant de délivrer une énergie électrique restituée, et

2) le gaz traverse ladite deuxième enceinte depuis son extrémité supérieure jusqu'à son extrémité inférieure, une partie supérieure de la deuxième enceinte étant réchauffée à ladite température T2, une partie inférieure de la deuxième enceinte restant à ladite température T3, et

3) le gaz sortant de l'extrémité inférieure de ladite deuxième enceinte à son extrémité inférieure à la température T3 est ensuite comprimé en passant par ledit deuxième compresseur de préférence actionné par l'énergie libérée par la deuxième turbine, de manière à le réchauffer à une température T4 supérieure à une température ambiante T0 et le cas échéant supérieur à T'1, mais inférieure à T2 en sortie dudit deuxième compresseur, et

4) de préférence, le gaz est ensuite refroidi à la température ambiante T0 ou T'1 grâce à des dits moyens de refroidissement avant d'être introduit dans ladite première enceinte par son extrémité inférieure ($1_2$) pour rejoindre la partie inférieure de ladite première enceinte qui se trouve à ladite température T'1, et

5) on fait circuler le gaz à travers ladite première enceinte, ce qui a pour effet d'augmenter le volume de matériau réfractaire de la partie inférieure à ladite température T'1 et de diminuer le volume de matériau réfractaire de la partie supérieure (1 a) à ladite température chaude T1, et

6) on réitère les étapes 1) à 5) ci-dessus jusqu'à ce que la partie inférieure de la première enceinte à ladite température T1 représente au moins 80% du volume de la première enceinte et la partie supérieure de ladite deuxième enceinte à ladite température T2 représente au moins 80% en volume de ladite deuxième enceinte.

On comprend que, pour maintenir dans les enceintes les mêmes températures T1 et T2 que dans le procédé de stockage d'énergie selon l'invention, on doit établir à l'étape initiale un gradient de pression entre les deux enceintes supérieur par rapport au gradient de pression entre les enceintes lors du procédé de stockage selon l'invention.

On comprend que à chaque étape 2) lorsque le gaz arrive à la température T2 à l'extrémité supérieure de la seconde enceinte laquelle se trouve initialement à pas plus de 20 % à la température T2 voire T'2 inférieure à T2 , et que le gaz descend depuis l'extrémité supérieure vers l'extrémité inférieure de la seconde enceinte, le passage du gaz dans le dit second matériau réfractaire poreux a pour effet que le gaz cède ses calories au dit second matériau réfractaire dans la partie supérieure de la seconde enceinte laquelle se trouve alors réchauffée à la température T2 tandis que sa partie inférieure non réchauffée reste à la température T3. Au fur et à mesure des différents passages du gaz, le front ou plutôt la couche de transition thermique entre les partie supérieure chaude et partie inférieure froide de la deuxième enceinte progresse vers le bas et la partie inférieure à la température T3 occupe un volume de moins en moins important. Parallèlement, à l'étape 5), le gaz arrive à une température ambiante T0 ou T'1 en bas la première enceinte ce qui a pour effet de céder des frigories au dit premier matériau réfractaire poreux et donc refroidir la partie inférieure de la première enceinte laquelle passe de la température T1 à la température T'1. Et, au fur et à mesure des différents passages du gaz, le front ou plutôt la couche de transition thermique entre les partie supérieure chaude et partie inférieure froide de la première enceinte progresse vers le haut et la partie supérieure à la température T1 occupe un volume de moins en moins important.

L'énergie électrique $E_1$ stockée sous forme d'énergie thermique en calories dans la première enceinte et frigories dans la deuxième enceinte est ainsi convertie en énergie électrique $E_R$ à partir de l'énergie mécanique libérée par la dite seconde turbine mise en oeuvre lors de la détente et refroidissement du gaz de la première enceinte

De préférence, à l'étape 6), on interrompt le procédé de restitution d'énergie de façon à ce qu'on maintienne une partie supérieure de la première enceinte à une dite température T1, ladite partie supérieure représentant moins de 20%, de préférence de 10 à 20%, en volume de ladite première enceinte, et/ou une partie inférieure de la deuxième enceinte à ladite température froide T3 représente moins de 20%, de préférence de 10 à 20%, de volume de la deuxième enceinte.

Avantageusement, le rendement de restitution d'énergie électrique par ledit générateur d'électricité $E_R/E_1$ est supérieur à 60%, de préférence de 75 à 85%.

Selon d'autres caractéristiques avantageuses du procédé de restitution d'énergie électrique selon l'invention:

- P'1 /P'2 est de 3 à 5, et
- T4 est de 150 à 400°C, et
- la pression P'1 est de 3 à 5 bar absolu ($3.10^5$ à $5.10^5$ Pa) et P'2 est de 1 à 1,5 bar absolu ($1.10^5$ à $1.5.10^5$ Pa).

Des avantages et autres caractéristiques de la présente invention apparaîtront à la lumière de la description détaillée qui va suivre, en référence aux figures suivantes dans lesquelles:

la figure 1 représente le diagramme fonctionnel d'une installation selon l'invention dans un procédé de stockage d'énergie selon l'invention, c'est-à-dire en phase de rechargement de la première enceinte ou source chaude,

la figure 2 représente le diagramme fonctionnel de l'installation selon l'invention dans une restitution sous forme d'énergie électrique de l'énergie thermique stockée au sein de la première enceinte ou source chaude,

la figure 3 représente en coupe et en vue de côté une enceinte d'une installation selon l'invention avec un arrachement montrant des perforations cylindriques,

les figures 3A et 3B représentent en coupe selon un plan horizontal, deux variantes d'arrangement des éléments de matériaux réfractaires respectivement de forme carrée et hexagonale,

la figure 4 représente un cycle thermodynamique de type gaz parfait, ainsi qu'une compression et une détente d'un gaz réel.

la figure 5 représente le cycle thermodynamique de rechargement de la première enceinte à partir d'une énergie électrique en provenance du réseau.

la figure 6 représente le cycle thermodynamique de restitution de l'énergie en provenance de la première enceinte en vue de sa réinjection dans le réseau.

Les figures 7, 7A et 7B représentent la progression d'une couche de transition thermique de hauteur h au sein d'une dite première enceinte (figure 7) entre les extrémités supérieure (figure 7 A) et inférieure (figure 7 B) .

Le dispositif de stockage d'énergie électrique et restitution d'énergie électrique selon l'invention comporte:

- une première enceinte calorifugée 1, comprenant une paroi en acier de 10 à 100 mm d'épaisseur et remplie d'un premier matériau réfractaire poreux capable de résister à des températures et pressions élevées d'un gaz neutre qu'elle contient, T1 de 1 000 à 1 600 °C, plus particulièrement 1 300°C et P1 de 2 à 5 bara (bar absolu ou $2.10^5$ à $5.10^5$ Pa).

- une deuxième enceinte calorifugée 2, de même volume de 10 000 à 15 000m$^3$ par exemple, comprenant une paroi en acier de 10 à 100 mm et remplie d'un deuxième matériau réfractaire poreux capable de résister aux température T2 et pression P2 du gaz inerte qu'elle contient, à savoir T2 de 500 à 700°C, plus particulièrement environ 600°C.

Lesdites première enceinte 1 et deuxième enceinte 2 sont substantiellement entièrement remplies d'un matériau réfractaire poreux 11 à fort volume calorifique, qui sera décrit plus loin.
Le dispositif comporte des conduites de circulation en circuit fermé entre lesdites première enceinte 1 et deuxième enceinte 2 qui permettent au gaz contenu dans l'installation de traverser chaque enceinte entre deux extrémités opposées $1_1$-$1_2$ et $2_1$-$2_2$, situées de préférence respectivement au niveau des extrémités haute et basses desdites enceintes.
Les conduites de circulation entre lesdites première et deuxième enceintes comportent en outre des moyens de compression/détente du gaz entre les deux enceintes, explicités ci-après.
Plus particulièrement, lesdites première et deuxième enceintes sont disposées verticalement.

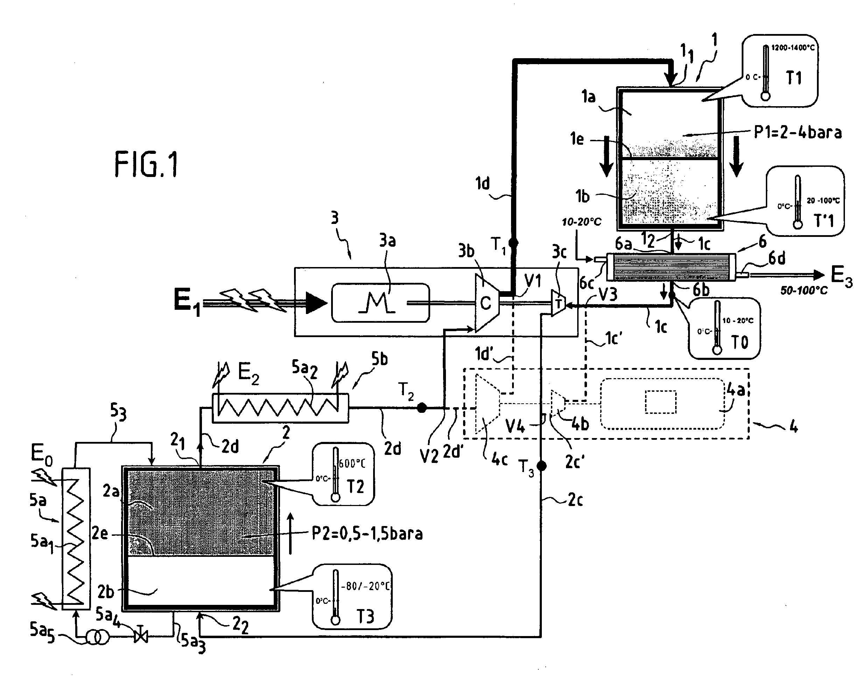

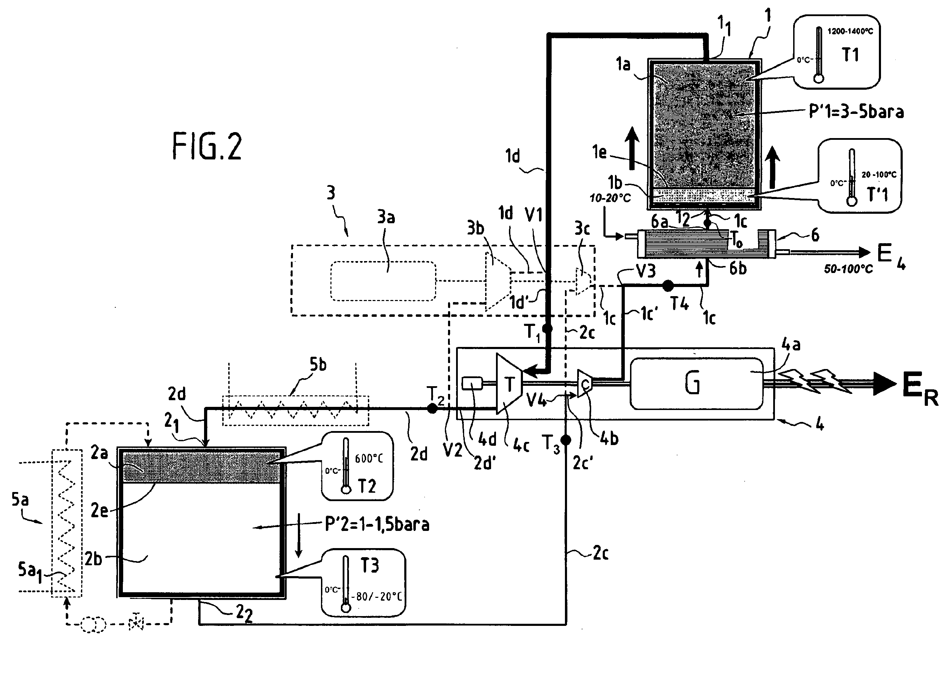

Sur les figures 1 et 2, la première enceinte 1 comprend à son extrémité supérieure $1_1$ une conduite supérieure 1 d, débouchant dans la partie supérieure 1 a de la première enceinte, et à son extrémité inférieure $1_2$ une première conduite inférieure 1 c débouchant dans la partie inférieure 1 b de la première enceinte 1.
De même, la deuxième enceinte 2 comporte à son extrémité supérieure $2_1$ une deuxième conduite supérieure 2d, débouchant dans la partie supérieure 2a de la deuxième enceinte 2, et à son extrémité inférieure $2_2$ une deuxième

conduite inférieure 2c débouchant dans la partie inférieure 2b de la deuxième enceinte 2.

Lesdites première et deuxième conduites inférieures 1c, 2c, et supérieures 1d, 2d, sont également calorifugées.

Ladite deuxième enceinte 2 est couplée avec un premier réchauffeur 5a, de préférence un réchauffeur comprenant une résistance électrique $5a_1$ et un circuit fermé de canalisation de réchauffement $5a_3$ entre deux extrémités de la deuxième enceinte, le gaz circulant dans la canalisation de réchauffement $5a_3$ est réchauffé par ledit premier réchauffeur 5a

Un premier groupe de compression/détente 3 est intercalé entre lesdites première enceinte 1 et deuxième enceinte 2. Ce premier groupe de compression/détente 3 comprend un moteur électrique 3a alimenté par une énergie électrique $E_1$, permettant d'actionner un premier compresseur dynamique 3b de type axial ou centrifuge, et une première turbine à gaz 3c, elle-même couplée audit premier compresseur 3b, leurs arbres respectifs étant attelés l'un à l'autre comme il sera explicité ci-après.

Ledit premier compresseur 3b est relié en sortie à l'extrémité supérieure $1_1$ de ladite première enceinte 1 par ladite première canalisation supérieure 1d, et ledit premier compresseur 3b est relié à son entrée à l'extrémité supérieure $2_1$ de ladite deuxième enceinte 2 par ladite deuxième canalisation supérieure 2d. Ladite deuxième canalisation supérieure 2d constitue la canalisation d'alimentation du premier compresseur 3b et ladite première canalisation supérieure 1d constituant la canalisation d'évacuation du gaz du premier compresseur 3b après compression en cycle de stockage, comme il sera explicité ci-après.

Un second réchauffeur 5b, de préférence comportant une seconde résistance électrique $5a_2$, coopère avec ladite deuxième canalisation supérieure 2d, ledit second réchauffeur 5b étant intercalé entre l'extrémité supérieure $2_1$ de la deuxième enceinte 2 et l'entrée du premier compresseur 3b.

Ladite première turbine 3c est reliée à l'extrémité inférieure $1_2$ de ladite première enceinte 1 par ladite première canalisation inférieure 1c, et ladite première turbine 3c est reliée à l'extrémité inférieure $2_2$ de ladite deuxième enceinte 2 par ladite deuxième canalisation inférieure 2c. Ladite première canalisation inférieure 1c sert à l'alimentation de ladite première turbine 3c en gaz évacué depuis la partie basse 1 b de la première enceinte 1, et le gaz s'évacuant de ladite première turbine 3c rejoint la partie basse 2b de ladite deuxième enceinte 2 par l'intermédiaire de ladite deuxième canalisation inférieure 2c, lorsque le dispositif fonctionne en cycle de stockage comme il sera explicité ci-après.

Un échangeur de chaleur 6 coopère avec ladite première canalisation inférieure 1c, entre l'extrémité inférieure $1_2$ de ladite première enceinte 1 et ladite première turbine 3c.

Comme explicité sur la figure 2, un deuxième groupe 4, dit groupe générateur d'électricité, est intercalé entre ladite première enceinte 1 et dite deuxième enceinte 2 de la manière suivante. Ledit deuxième groupe générateur d'électricité 4 comporte un deuxième moteur électrique 4d, couplé à une deuxième turbine à gaz 4c et à un deuxième compresseur 4b. Ce deuxième moteur électrique 4d est un petit moteur servant essentiellement à lancer la deuxième turbine 4c lors du démarrage du cycle de restitution/déstockage de l'énergie, comme il sera explicité ci-après.

Le deuxième groupe générateur d'électricité 4 comporte un alternateur électrique 4a, attelé à l'arbre de sortie de ladite deuxième turbine à gaz 4c et dudit deuxième compresseur 4b, de façon à restituer une énergie électrique $E_R$ lorsque lesdites deuxième turbine 4c et deuxième compresseur 4b sont activés, comme il sera explicité ci-après, dans un cycle de déstockage d'énergie.

Ladite deuxième turbine 4c est alimentée en gaz par une conduite 1d' dérivée de ladite première conduite supérieure 1d (encore appelée première conduite de dérivation supérieure 1d'), ou une conduite parallèle à ladite première conduite supérieure, assurant la liaison entre l'extrémité supérieure $1_1$ de la première enceinte 1 et la deuxième turbine 4c. Et, le gaz détendu sortant de ladite deuxième turbine 4c, lorsque le dispositif fonctionne en cycle de déstockage, est évacué vers l'extrémité supérieure $2_1$ de la deuxième enceinte 2 par l'intermédiaire d'une conduite 2d' dérivée de la deuxième conduite supérieure 2d (encore appelée deuxième conduite de dérivation supérieure 2d'), ou par une conduite parallèle à ladite deuxième conduite supérieure, assurant ainsi la liaison entre l'extrémité supérieure $2_1$ de la deuxième enceinte et la deuxième turbine 4c.

Ledit deuxième compresseur 4b est alimenté en gaz par une conduite dérivée 2c' de ladite deuxième conduite inférieure 2c (encore appelée deuxième conduite inférieure de dérivation 2c') ou une conduite parallèle à celle-ci assurant ainsi la liaison entre l'extrémité inférieure $2_2$ de la deuxième enceinte et le deuxième compresseur 4b. Et, le gaz est évacué dudit deuxième compresseur 4b en direction de l'extrémité inférieure $1_2$ de ladite première enceinte 1, par l'intermédiaire d'une conduite 1c' dérivée de ladite première conduite inférieure 1c (encore appelée première conduite inférieure de dérivation 1c'), ou une conduite parallèle à ladite première conduite inférieure 1 c, assurant la liaison entre l'extrémité inférieure $1_2$ et ledit deuxième compresseur 4b.

La deuxième conduite inférieure de dérivation 2c' assure la liaison entre le deuxième compresseur 4b et la deuxième canalisation inférieure 2c avant que cette dernière n'arrive à ladite première turbine 3c. La première conduite supérieure de dérivation 1 d'assure la liaison entre la deuxième turbine 4c et la première conduite supérieure 1d avant que cette dernière n'arrive audit premier compresseur 3b. La deuxième conduite supérieure de dérivation 2d' assure la jonction entre la deuxième turbine 4c et la deuxième conduite supérieure 2d entre ledit deuxième réchauffeur 5b et ledit premier compresseur 3b. La première conduite inférieure de dérivation 1c' assure la liaison entre le deuxième compresseur 4b et la première conduite inférieure 1c entre ledit échangeur de chaleur 6 et ladite première turbine 3c.

Les enceintes 1 et 2 sont remplies d'un matériau réfractaire poreux 11, permettant au gaz de circuler à travers lesdites enceintes de part en part entre leurs extrémités supérieure $1_1$-$2_1$ et inférieure $1_2$-$2_2$. Les matériaux réfractaires poreux mis en oeuvre dans les première et deuxième enceintes présentent une porosité (pourcentage de vide) de 20 à 60%, ce qui constitue un bon compromis entre un échange thermique suffisant entre le gaz et les matériaux réfractaires d'une part, et d'autre part, une perte de charge suffisamment faible, tout en conservant une vitesse de circulation suffisamment élevée à travers ledit matériau poreux. En effet, en opération, le dispositif selon l'invention est entièrement rempli de gaz neutre, de préférence d'argon, à savoir les circuits de canalisation mentionnés ci-dessus, les turbines et compresseurs, les réchauffeurs, ainsi que lesdites première et deuxième enceintes.

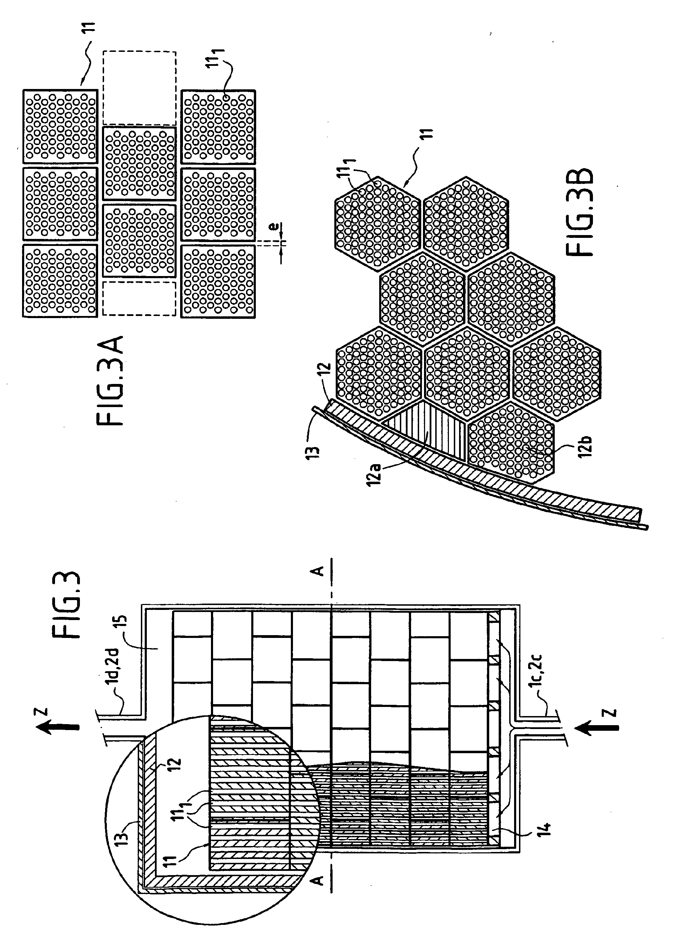

Sur la figure 3 on a représenté en coupe et en vue de côté une enceinte comportant une enveloppe externe métallique étanche 13, un système d'isolation interne 12 disposé contre la paroi de l'enveloppe externe métallique 13 et un empilement de blocs ou briques de matériaux réfractaires 11 présentant des canaux verticaux $11_1$ sous la forme de perforations, de préférence à section circulaire de diamètre de 5 à 20 mm, les traversant intégralement et agencés de manière sensiblement uniforme, plan par plan, sur toute la section horizontale de ladite première enceinte, comme détaillé sur les figures 3A et 3B.

Les canaux $11_1$ de différents blocs 11 superposés sont alignés les uns par rapport aux autres de manière à permettre la circulation du gaz dans la direction longitudinale ZZ de l'enceinte 1, 2 entre les deux extrémités opposées de l'enceinte sans obstacle entre les canaux de différents blocs disposés de façon superposée dans la même direction longitudinale ZZ. Une structure de supportage largement ajourée 14, située en partie basse de ladite enceinte, permet de répartir les gaz entrant ou sortant par les conduites inférieures calorifugées attenantes 1c, 2c, de manière sensiblement uniforme sur toute la section de ladite enceinte et de les diriger ainsi de manière optimale, donc avec un minimum de pertes de charges, vers les canaux $11_1$ traversant verticalement lesdits blocs de matériaux réfractaires 11 en cas d'alimentation par le bas. De même, des espaces vides 15 sont prévus en partie haute des enceintes, de manière à permettre une bonne répartition du gaz lorsque les enceintes sont alimentées en gaz par le haut. Dans la figure 3, les gaz arrivent par le bas et sortent dans la partie haute de ladite enceinte, ce qui correspond à la phase de stockage pour la deuxième enceinte et la phase de restitution pour la première enceinte, comme explicité ci-après.

La figure 3A est une coupe horizontale partielle en vue de dessus selon le plan AA de la figure 3. Les blocs de matériaux réfractaires 11 sont carrés et perforés de multiples trous cylindriques circulaires parallèles selon la direction verticale ZZ perpendiculaire au plan de la figure. Les blocs sont avantageusement espacés les uns des autres, par exemple de e=5mm, de manière à ce que la dilatation desdits blocs, lors des changements de température, puisse se faire sans dommages, dans l'épaisseur dudit espace interstitiel, et que ce dernier puisse aussi servir, le cas échéant, de canal vertical de passage du gaz depuis le bas de l'enceinte vers le haut de l'enceinte. Les blocs de matériaux réfractaires 11 sont avantageusement en contact direct avec la paroi de l'enceinte, au niveau de l'isolation 12 de ladite enceinte, de manière à limiter les passages directs et incontrôlés des gaz chauds ou froids dans cette zone. Dans une première version de l'invention, les blocs dans les plans successifs de blocs de matériaux réfractaires sont avantageusement décalés les uns des autres d'un demi module ou demi bloc en quinconce, de manière à assurer une stabilité d'ensemble au sein de ladite enceinte, comme représenté sur la figure 3. Dans une version préférée de l'invention, les blocs sont empilés verticalement les uns sur les autres sur toute la hauteur de l'enceinte, pour constituer des chandelles indépendantes les unes des autres et distantes de 5 à 10 mm en toutes directions, ce qui autorise les dilatations lors des cycles de stockage-restitution, tout en évitant les risques d'usure au niveau des plans horizontaux AA lors desdits cycles de stockage-restitution, lorsqu'ils sont montés en quinconce comme détaillé sur la figure 3.

Sur la figure 3B, on a représenté des blocs réfractaires 11a de section hexagonale, à proximité de la paroi isolante d'une enceinte de forme cylindrique. Le raccordement avec la paroi isolante se fait soit par contact direct de l'arête d'un bloc, soit par une forme de bloc isolant 12a adaptée à la courbure, ou encore par bourrage d'un matériau isolant 12a, par exemple du même type que l'isolant 12 de ladite enceinte, soit encore par une forme de bloc réfractaire 12b adaptée à la courbure.

Des vannes de dérivation $V_1$ à $V_4$ sont prévues aux jonctions entre les:

- première conduite supérieure 1d et première conduite supérieure de dérivation 1d' : $V_1$,
- deuxième conduite supérieure 2d et deuxième conduite supérieure de dérivation 2d' : $V_2$,
- première conduite inférieure 1c et première conduite inférieure de dérivation 1 c' : $V_3$,
- deuxième conduite inférieure 2c et deuxième conduite inférieure de dérivation 2c' : $V_4$,

Comme explicité ci-après en liaison avec les figures 1 et 2, on peut faire fonctionner uniquement ledit premier groupe compresseur 3 (premier compresseur 3b et première turbine 3c) en déconnectant ledit deuxième groupe générateur d'électricité 4 pendant un cycle de stockage d'énergie ou, inversement, on peut déconnecter ledit premier compresseur 3 et ouvrir lesdites conduites de dérivation pour faire fonctionner ledit deuxième compresseur 4 pendant un cycle de déstockage d'énergie.

Le dispositif selon l'invention peut, en effet, fonctionner selon deux modes différents, à savoir :

- un premier mode, avec des cycles de stockage ou chargement, et
- un deuxième mode, avec des cycles de restitution d'énergie ou cycles de déstockage d'énergie.

Le mode de chargement ou stockage d'énergie fonctionne de la manière suivante. Initialement, le gaz inerte, tel que l'argon est chargé dans le dispositif, à savoir dans les deux enceintes, les turbines et compresseurs, et les canalisation; il est à température ambiante, par exemple T=20°C.

Sur la figure 1, on a représenté le dispositif en phase de stockage d'énergie ou rechargement d'énergie dans la première enceinte 1.

Initialement, l'installation complète est à la température ambiante T0 de 10 à 20°C, le gaz contenu dans les enceintes et canalisations étant donc à cette dite température ambiante T0 et les deux enceintes sont à une même pression initiale liée à la pression de chargement, par exemple de 1 à 1, 2 bara (bar absolu) .

On réchauffe alors la masse de matériaux réfractaires à l'intérieur de la seconde enceinte 2 jusqu'à une température T2 de 600°C. Pour ce faire, on fait circuler en boucle fermée le gaz de la deuxième enceinte entre ses extrémités supérieure $2_1$ et inférieure $2_2$ que l'on réchauffe à l'extérieur de l'enceinte à l'aide du premier réchauffeur 5a, qui chauffe le gaz à l'intérieur de la canalisation de réchauffement $5a_3$ assurant la boucle entre les extrémités inférieure $2_2$ et supérieure $2_1$ de la seconde enceinte à l'extérieur de celle-ci. On fait circuler le gaz dans la canalisation de chauffage $5a_3$ grâce à un ventilateur $5a_5$ et le premier réchauffeur 5a comprend une première résistance $5a_1$. Une vanne $5a_4$ permet d'isoler le premier réchauffeur 5a lorsqu'il est hors service en fin de préchauffage initial, évitant ainsi les transferts et recirculation indésirables de gaz en cycle normal.

Lorsque toute la masse de matériaux réfractaires dans la- deuxième enceinte 2 est portée à la température T2 de 600°C, on ferme la vanne $5a_4$ et on envoie le gaz par l'intermédiaire de la seconde conduite supérieure 2d dans le premier compresseur 3b, de manière à le réchauffer à la température T1 de 1200 à 1400°C, par exemple 1300°C en sortie dudit premier compresseur. Un gradient de pression s'établit entre les deux enceintes, la première enceinte étant portée à la pression P1 de 2 à 4 baras (bar absolu, $2.10^5$ à $4.10^5$ Pa) et la pression P2 dans la deuxième enceinte étant réduite à environ 1 bara ($1.10^5$ Pa).

Dans la première enceinte, la partie supérieure 1a de matériau réfractaire tend donc vers la température T1 de 1300°C tandis que la partie inférieure 1b s'établit à une température T'1 de 20 à 100°C.

En sortie à l'extrémité inférieure $1_2$ de la première enceinte, le gaz doit être détendu par la première turbine 3c pour être rétabli à la pression P2 de la deuxième enceinte avant d'être réintroduit dans la deuxième enceinte, détendu et refroidi à une température T3 en bas de la deuxième enceinte. Dans la mesure où l'énergie stockée par le système est liée au gradient de température T1-T3, on a intérêt à établir une température T3 la plus basse possible. Pour ce faire, on a intérêt à introduire et rentrer dans la première turbine 3b un gaz à une température la plus basse possible. C'est pourquoi en sortie à l'extrémité inférieure $1_2$ de la première enceinte, on refroidit le gaz de la température T'1 à la température T0 de 10 à 20°C à l'aide d'un échangeur 6 avant de l'introduire dans la première turbine 3c.

Au fur et à mesure des différents cycles de circulation du gaz lors du fonctionnement en mode de stockage, la partie supérieure 1a de matériaux réfractaires de la première enceinte chaude à la température T1 de 1300°C occupe un volume de plus en plus important de l'enceinte, c'est-à-dire que le gaz chaud introduit à l'extrémité supérieure $1_1$ de la première enceinte 1 cède ses calories auxdits matériaux réfractaires et réchauffe un volume de plus en plus important de matériau réfractaire de la première enceinte. Un front 1e qui correspond en fait à une zone de transition de température est schématisé par une ligne sur les figures 1 et 2. Les parties supérieure 1 a chaude à la température T1 et inférieure 1b froide à la température T'1 de 20 à 100°C, se déplacent progressivement vers le bas au fur et à mesure des cycles de circulation du gaz lors du stockage. Inversement, la partie inférieure 2b de la deuxième enceinte à la température T3 d'au moins -80 à -20°C occupe un volume de plus en plus important de l'enceinte 2. Le front 2e schématisant une ligne de séparation qui est en fait une zone de transition entre la partie inférieure 2b à la température T3 et une partie supérieure 2a à la température T2, se déplace progressivement vers le haut au fur et à mesure des différents cycles de circulation du gaz.

Le premier compresseur 3b est actionné par un moteur électrique 3a qui consomme une énergie électrique $E_1$. La première turbine 3c est couplée au premier compresseur 3b à l'arbre duquel elle est attelée, de sorte que la première turbine 3c fournit de l'énergie au premier compresseur 3b en complément à l'énergie fournie par le premier moteur 3a.

Au cours des cycles successifs de circulation du gaz en mode de stockage d'énergie, la température de la partie supérieure 2a de la deuxième enceinte a tendance à diminuer à une température T'2 inférieure à T2, c'est-à-dire en dessous de 600°C par exemple, de 300 à 450°C.

Pour pallier cette baisse de température de la partie supérieure 2a de la deuxième enceinte, on réchauffe avantageusement le gaz sortant à l'extrémité supérieure $2_1$ de la deuxième enceinte à l'aide d'un second réchauffeur 5b comprenant une deuxième résistance $5a_2$ permettant de chauffer le gaz circulant dans la conduite supérieure 2d pour le maintenir à une température T2 de 600 °C avant qu'il n'arrive dans le premier compresseur 3b. De même, on règle le moteur 3a de manière à maintenir la température de sortie du premier compresseur 3b à la température T1 constante de l'ordre de 1300°C.

Pendant toute la durée des différents cycles de stockage d'énergie, on mesure la température du gaz en entrée du second réchauffeur 5b et on ajuste en temps réel la quantité d'énergie électrique $E_2$ injectée par seconde dans le second réchauffeur 5b pour porter le gaz à la température sensiblement constante T2. La puissance injectée dans l'installation pendant ces cycles de stockage correspondra donc à l'énergie électrique $E_1$ alimentant le premier moteur électrique 3a, additionnée de l'énergie électrique $E_2$ alimentant le second réchauffeur 5b.

Comme mentionné précédemment lors des cycles de stockage d'énergie, il est nécessaire de refroidir le gaz sortant à l'extrémité inférieure $1_2$ de la première enceinte pour diminuer sa température jusqu'à la température T0 avant de le détendre dans la première turbine 3c. Ceci se fait à l'aide de l'échangeur 6. L'échangeur de chaleur 6 est alimenté par un fluide de refroidissement tel que de l'eau ou de l'air froid à 10-20°C pour refroidir le gaz sortant de la première enceinte à la température T'1 de 20 à 100°C et le porter à la température T0 de 10 à 20°C. Le fluide de refroidissement de l'échangeur 6 sort de l'échangeur 6 en 6d à une température de 50 à 100°C selon le débit d'air ou d'eau de refroidissement. L'échangeur thermique 6 libère donc une énergie thermique $E_3$ sous forme d'eau réchauffée à 50-100°C. Cette énergie thermique $E_3$ est une énergie qui ne peut pas être stockée dans le système, mais qui peut être récupérée soit au sein d'une pompe à chaleur ou encore servir dans des processus industriels ou encore pour du réchauffage urbain. $E_3$ constitue donc, lors d'un cycle complet de stockage, une perte qui affecte le rendement global du dispositif.

Pour stabiliser le système et optimiser son fonctionnement lors de la succession des différents passages du fonctionnement en mode de stockage au fonctionnement en mode de restitution d'énergie, il est préférable d'interrompre le stockage avant que la première enceinte soit entièrement portée à la température T1 ou que la deuxième enceinte soit entièrement portée à la température T3.

En pratique, on maintient dans la première enceinte une partie inférieure 1 b représentant 10 à 20% du volume total de l'enceinte qui reste à la température T'1 de 20 à 100°C. Parallèlement, on maintient une partie supérieure 2a de la deuxième enceinte à la température T2 ou proche de la température T2, c'est-à-dire que l'on interrompt le stockage lorsque la partie inférieure 2b de la deuxième enceinte à la température de -80 à -20°C représente 80 à 90% du volume de la deuxième enceinte.

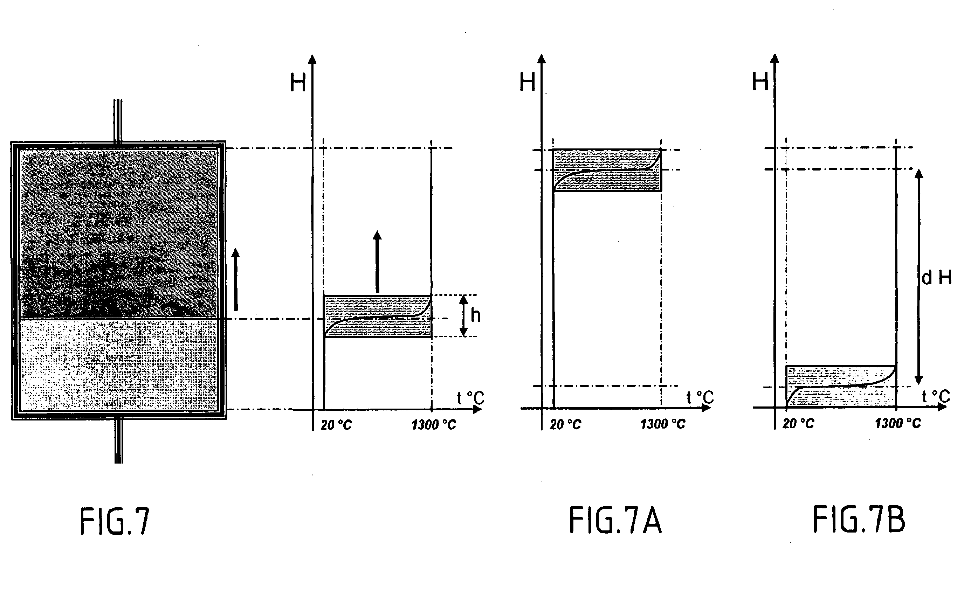

Ce volume de 10 à 20% correspond en fait au volume de la couche de transition thermique de hauteur a décrite plus loin en référence aux figures 7.

Sur la figure 2, on a représenté le cycle de restitution d'énergie stockée au sein de la première enceinte 1, sous forme d'énergie électrique $E_R$.

Lorsque le chargement de la première enceinte 1 est terminé, on arrête le premier moteur 3a, on actionne les différentes vannes $V_1$ à $V_4$, pour alimenter le deuxième groupe 4 avec lesdites première conduite et deuxième conduite supérieures de dérivation 1d', 2d', et première conduite et deuxième conduite inférieures de dérivation 1c', 2c', les premier compresseur 3b et première turbine 3c n'étant plus alimentés en gaz.

Initialement, en fin de phase de chargement, lorsque le premier moteur 3a est interrompu, le gaz est immobile et la pression est équilibrée dans les deux enceintes 1 et 2, à une valeur intermédiaire de 1, 5 à 2, 5 bara (1, $5.10^5$ à 2, $5.10^5$ Pa).

Pendant une phase de démarrage du mode de fonctionnement en cycle de restitution ou de déstockage d'énergie, on actionne un petit moteur électrique 4d qui actionne la deuxième turbine 4c ainsi que le deuxième compresseur 4b qui lui est couplé, de manière à ce que s'établisse un gradient de pression entre les deux enceintes 1 et 2 respectivement avec une pression P'1 supérieure à P1 dans la première enceinte 1 et une température P'2 inférieure à P2 dans la deuxième enceinte 2.

En effet, lors du démarrage, le deuxième compresseur aspire le gaz en provenance de la seconde enceinte et l'envoie dans la première enceinte, ce qui augmente la pression dans ladite première enceinte, alimentant ainsi en gaz la deuxième turbine, pour revenir enfin dans la seconde enceinte et continuer son cycle de circulation. Dès que la turbine atteint sa vitesse propre, on arrête d'alimenter le petit moteur électrique 4d.

En fonctionnement établi, la deuxième turbine 4c aspire le gaz de la partie supérieure de la première enceinte vers la deuxième enceinte en réalisant un refroidissement et une détente du gaz. Pour optimiser le fonctionnement de l'installation, il est souhaitable que le gaz en sortie de la deuxième turbine 4d arrive sensiblement à la même température T2 que la température du gaz en partie supérieure de l'enceinte 2 en fin de cycle de stockage. Pour ce faire, les pertes au niveau des turbine et compresseur sont telles que P'1/P'2 > P1/P2. En pratique, P'1 est de 3 à 5 baras et P'2 de 1 à 1,5 baras.

Lorsque le gradient de pression P'1 / P'2 est établi, on coupe le moteur 4d. Le gaz dans la partie inférieure 2b de la deuxième enceinte est à la température T3 de -80 à -20°C qui était sa température en fin de cycle de stockage. Et le gaz est convoyé en direction du deuxième compresseur 4b afin d'y être recomprimé à la pression P'1. Il est concomitamment réchauffé à la température T4, laquelle température T4, à cause des pertes du deuxième compresseur est supérieure à la température T0. Typiquement T4 est de l'ordre de 100-150°C.

Le gaz à la température T4 supérieure à T0 en sortie du deuxième compresseur 4b doit donc être refroidi à la température T'1 à l'aide de l'échangeur thermique 6 avant d'être envoyé à l'extrémité inférieure $1_2$ de la première enceinte 1, dont la partie inférieure 1 b se trouve à la température T'1 de 20 à 120°C.

Le refroidissement du gaz en sortie du deuxième compresseur 4b lors du cycle de déstockage a pour effet qu'une énergie thermique E4 est perdue par réchauffement du liquide de refroidissement. Mais, ce refroidissement du gaz de la température T4 à T'1 permet de faciliter, pendant les cycles de stockage d'énergie, le refroidissement du gaz en sortie de l'extrémité inférieure $1_1$ de la première enceinte de la température T'1 jusqu'à la température T0 en aval de l'échangeur thermique afin que le gaz arrive à température ambiante T0, en entrant dans la première turbine 3c lors des cycles de stockage d'énergie. Globalement, la perte de l'énergie thermique E4 lors des cycles de déstockage est compensée par une perte d'énergie thermique E3 au niveau de l'échangeur 6 moins importante lors des cycles de stockage. Les énergies thermiques E3 + E4 correspondent globalement aux pertes de l'installation liées au gradient T4-T0 et dues aux pertes au niveau des compresseurs et turbines.

L'énergie restituée par le système $E_R$ correspond à l'énergie libérée par la deuxième turbine 4c qui actionne un générateur- alternateur électrique 4a qui permet de restituer de l'énergie sous forme d'électricité. Globalement, $E_R$ correspond plus précisément à l'énergie libérée par la deuxième turbine 4c diminuée de l'énergie consommée par le deuxième compresseur 4b qui lui est couplé. D'autre part, le rendement global de l'installation entre les cycles de stockage et déstockage s'écrit de la manière suivante : $E_R = E_1 + E_2 - (E_3 + E_4) - E_5$. $E_5$ représentant les pertes à travers l'isolation des enceintes, des conduites, des turbines et compresseurs et des divers accessoires.

Les pertes E3+E4+E5 représentent 15 à 25% par rapport aux énergies $E_1 + E_2$ fournies, le rendement global de l'installation et du procédé de restitution d'énergie étant donc de 75 à 85%.

Pour optimiser le rendement énergétique de l'installation, il est avantageux de ne pas réchauffer complètement la première enceinte à la température T1 en fin de cycle de stockage, de manière à conserver une couche de transition thermique dans la partie inférieure 1 b à température T0 ou T'1, et conserver une couche de transition thermique dans la partie supérieure 2b de la deuxième enceinte à la température T2. De même, lors des cycles de restitution d'énergie en fin de cycle, on arrête le déstockage avant que la première enceinte ne soit complètement refroidie et la deuxième enceinte ne soit complètement réchauffée de manière à conserver une couche de transition thermique dans la partie supérieure 1a correspondant à 10 à 20% du volume de l'enceinte qui reste à la température T1, et concomitamment, une couche de transition thermique dans la partie inférieure 2b de la deuxième enceinte qui reste à la température T3, cette couche représentant également 10 à 20% du volume de la deuxième enceinte.

Cette couche de transition thermique dans la partie supérieure 2b de la deuxième enceinte à température T2 facilite le rétablissement du gradient de pression entre les deux enceintes P'1/P'2 en début de cycle de restitution d'énergie correspondant aux mêmes températures T1/T2 respectivement dans les première/deuxième enceintes.

Le maintien d'une couche de transition thermique à une extrémité des première et deuxième enceintes en fin de cycle de stockage et en fin de cycle de restitution est aussi avantageux en termes de rendement énergétique global de l'installation. En effet, si l'on voulait réchauffer entièrement la première enceinte en fin de cycle de stockage, le gaz sortant à l'extrémité inférieure $1_1$ de la première enceinte pendant le réchauffement du volume correspondant à la couche de transition thermique à l'extrémité inférieure de la première enceinte, sortirait à une température supérieure à la température T'1, ce qui impliquerait une énergie de refroidissement E3 supérieure et donc des pertes énergétiques supérieures.

Parallèlement, si en fin de cycle de restitution, on voulait réchauffer entièrement l'extrémité inférieure $2_2$ de la deuxième enceinte, le gaz sortant à l'extrémité inférieure $2_2$ de la deuxième enceinte sortirait à une température supérieure à T3 et arriverait en aval de l'échangeur thermique 6 à une température T4 augmentée, ce qui impliquerait une énergie thermique de refroidissement E4 supérieure et donc des pertes énergétiques là encore supérieures.

En outre, le maintien d'une partie inférieure 1b à la température T'1 en fin de stockage et une partie supérieure 2a à la température T2 dans la deuxième enceinte en fin de stockage facilite le démarrage du cycle de restitution, lequel nécessite une mise en oeuvre du moteur 4d pendant un temps plus réduit pour établir un fonctionnement stable avec les gradients de température T1 et T2 dans les première et deuxième enceintes respectivement aux pressions P'1 et P'2 lors de la restitution. De même, le maintien d'une couche supérieure 1a chaude à la température T1 dans la première enceinte en fin de restitution et le maintien d'une couche inférieure froide 2b à la température T3 en fin de cycle de restitution, facilite le démarrage du cycle de stockage ultérieur, en diminuant l'énergie électrique E2 nécessaire pour maintenir le gaz entrant dans le premier compresseur 3b à la température T2.

Les dimensionnements des premier compresseur 3b / première turbine 3c mis en oeuvre pendant les cycles de stockage, et deuxième compresseur 4b / deuxième turbine 4c pendant les cycles de déstockage, sont radicalement différents compte tenu des températures différentes auxquelles ils sont soumis. En effet, le volume d'un gaz augmentant avec sa température, les compresseur et turbine fonctionnant avec des gaz entrant à température élevée devront être de taille plus importante. C'est pourquoi lors de la phase de stockage, le premier compresseur 3b est un gros compresseur puisqu'il fonctionne à température T1 de 1300°C, tandis que la première turbine 3c qui fonctionne à température T3 d'environ -50°C sera une petite turbine. Inversement, lors des cycles de déstockage, le deuxième compresseur 4c qui fonctionne à température T3 de - 50°C sera un petit compresseur tandis que la deuxième turbine 4c qui fonctionne à température T1 d'environ 1300°C sera une grosse turbine. Il y a lieu de relever que la mise en oeuvre d'une première petite turbine 3c pendant la phase de stockage facilite son entraînement par le premier gros compresseur 3b. De même, la mise en oeuvre d'un petit deuxième compresseur 4b réduit les pertes énergétiques et l'énergie $E_R$ correspond à l'énergie libérée par la deuxième turbine 4c diminuée de l'énergie consommée par le deuxième compresseur 4b. Il y a donc un intérêt supplémentaire à mettre une température T3 la plus basse possible en entrée du deuxième compresseur 4b pour également diminuer la consommation d'énergie affectant le rendement global énergétique du système.

La mise en oeuvre d'un refroidissement à la fois lors des cycles de stockage d'énergie et de déstockage d'énergie en aval de l'extrémité inférieure de la première enceinte lors du stockage d'énergie et en amont de l'extrémité inférieure de la première enceinte lors de la restitution d'énergie, à l'aide d'un même échangeur thermique, permet de diminuer la taille de l'échangeur thermique en comparaison d'un mode de réalisation dans lequel on ne refroidirait pas, par exemple lors des cycles de restitution d'énergie, le gaz dans un échangeur thermique en aval de l'extrémité inférieure de la première enceinte.

Au fur et à mesure du déroulement successif des cycles de circulation du gaz lors de la phase de restitution d'énergie, le front 1e séparant la partie inférieure 1b froide à T'1 et la partie supérieure 1a chaude à T1 de la première enceinte se déplace progressivement vers le haut, tandis que le front 2e séparant la partie supérieure chaude 2a à température T2 de la partie inférieure 2b froide à température T3 de la deuxième enceinte se déplace progressivement vers le bas.

On notera que la mise en service de l'échangeur 6 sur le circuit de retour du gaz entre le deuxième compresseur 4b et la partie inférieure de la première enceinte 1, d'une part et, d'autre part, le fonctionnement de la deuxième turbine 4c sont ajustés de manière à maintenir lesdites températures T1 et T2 à des valeurs constantes respectivement, par exemple de 1 300°C et 500°C, pendant tout le cycle de restitution d'énergie.

Il y a lieu également d'observer que, selon une caractéristique originale de la présente invention essentielle, les températures T1 et T2 sont constantes et identiques sur les cycles de chargement/stockage et déchargement/restitution d'énergie.

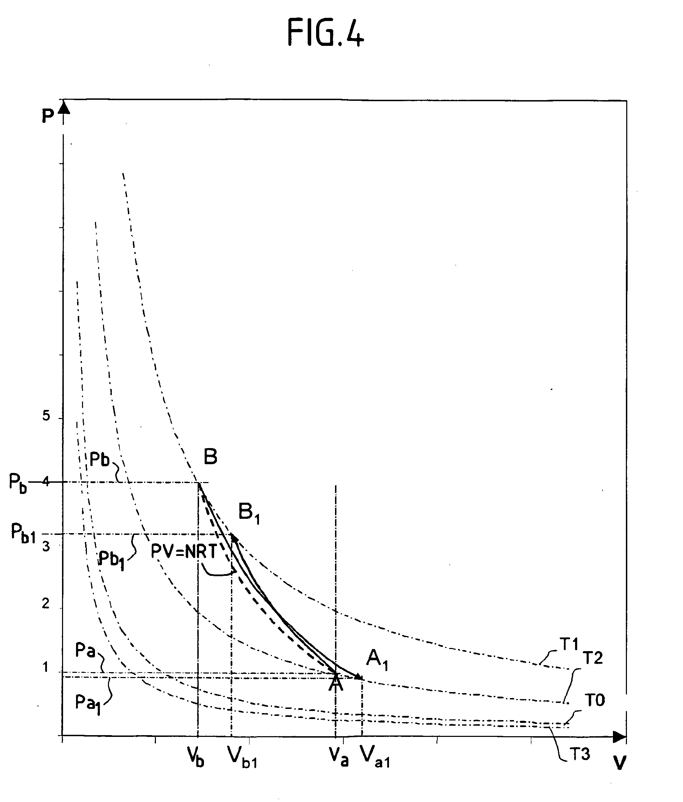

Sur la figure 4, on a représenté un graphique correspondant à un cycle thermodynamique dans lequel les abscisses représentent les volumes et les ordonnées représentent les pressions absolues (bara). On a représenté quatre isothermes correspondant respectivement à :

- T0 (température ambiante de 20°C),
- T1 (température première enceinte : 1300°C),
- T2 (température chaude seconde enceinte : 600°C),
- T3 (température froide seconde enceinte :- 80°C/- 20°C) .

Entre les points A et B, on a représenté un cycle de compression-détente adiabatique d'un gaz parfait selon la loi : $PV^\gamma$ = constante, entre les températures T1 et T2. Pour une machine réelle, le comportement est différent et, dans le cas d'une compression adiabatique entre T2 et T1, la courbe suivie est AB1, qui montre que la température T1 sera atteinte pour une pression Pb1 inférieure à Pb et un volume Vb1 supérieur à Vb. De même, dans une détente adiabatique, la température T2 est atteinte pour une pression Pa1 inférieure à Pa et un volume Va1 supérieur à Va.

Il convient de noter que pour une gestion efficace de la chaleur dans les 2 enceintes, il importe qu'au niveau de la partie haute de chacune de ces enceintes le gaz soit à des températures sensiblement identiques lors de la phase de stockage et lors de la phase de restitution. Pour expliciter ce point, considérons par exemple la partie haute de la première enceinte. Durant la phase de stockage, le gaz chaud pénètre depuis le haut dans le stock de réfractaires. La température des solides ne peut pas dépasser celle du gaz mais seulement s'en approcher au mieux. Durant la phase de restitution, la température du gaz qui sort en partie haute du stock de matériaux réfractaires de la première enceinte peut au mieux être égale à celle desdits matériaux réfractaires. On peut faire des remarques identiques pour la seconde enceinte. Or, dans le but d'obtenir le meilleur rendement possible il importe au niveau de la première enceinte, que toute la chaleur du gaz injectée durant la phase de stockage soit exploitée au mieux durant la phase de restitution, et au niveau de la seconde enceinte que toute la chaleur récupérée du gaz durant la phase de stockage soit réutilisée au mieux durant la phase de restitution. Autrement dit, on a intérêt à rechercher des températures T1 et T2 qui soient aussi voisines que possible (idéalement identiques) lors des phases de stockage et de restitution.

On vient de voir sur la figure 4 que si on vise les mêmes températures T1 et T2 lors d'une détente ou d'une compression avec des machines réelles, les rapports des pressions sont différents. Ceci signifie que les rapports des pressions des ensembles turbine-compresseur utilisés lors des phases de stockage et de restitution doivent être différents. Par exemple sur la figure 4, lors du stockage la pression haute est $P_{b1}$ et la pression basse $P_a$, alors que durant la phase de restitution la pression haute est $P_b$ et la pression basse $P_{a1}$.

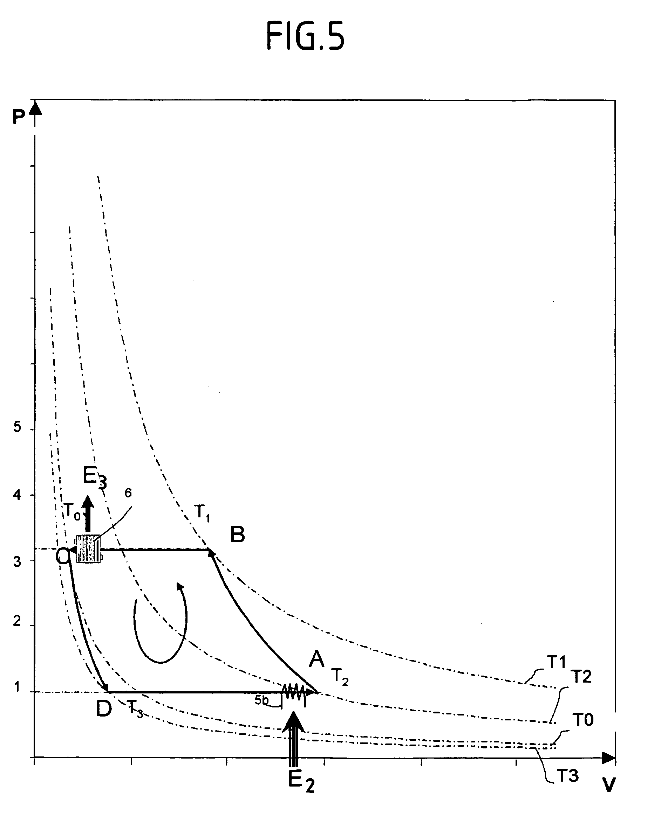

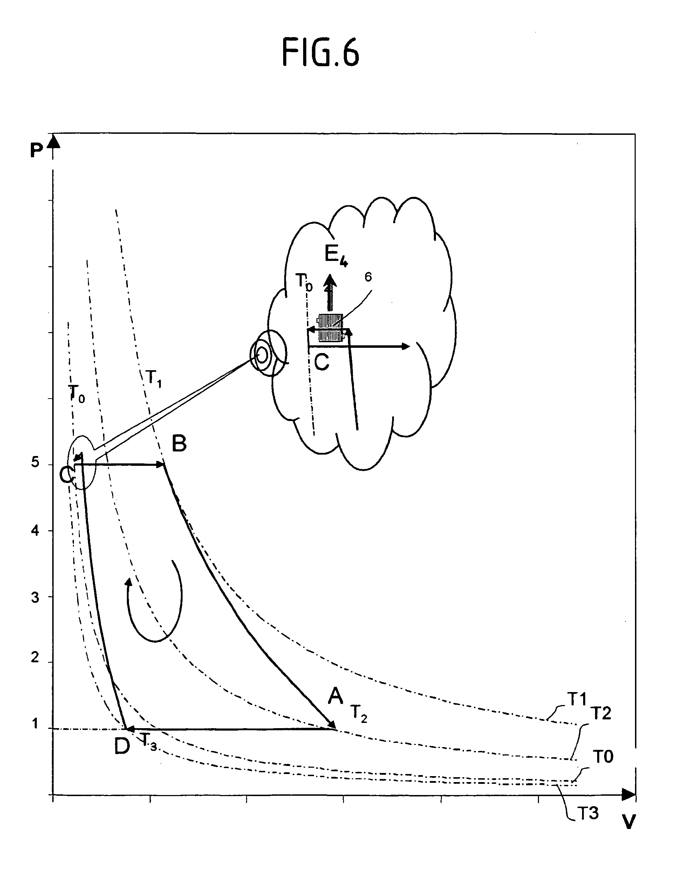

Dans les figures 5 et 6, on a représenté les cycles thermodynamiques correspondant respectivement aux cycles de stockage et de restitution de l'énergie dont les installations et procédés sont décrits en liaison avec les figures 1 et 2. Ces cycles thermodynamiques correspondent à un volume unitaire de gaz, par exemple 1 m$^3$, effectuant un cycle complet durant lequel il acquiert de l'énergie dans une enceinte ou un compresseur, puis le restitue dans une turbine, ou l'autre enceinte. Ledit volume unitaire effectue ce cycle thermodynamique en un temps très court par rapport à la durée complète d'un cycle de stockage ou de restitution, et effectue ainsi des centaines ou des milliers, voire des dizaines de milliers de cycles thermodynamiques, c'est-à-dire repasse autant de fois dans le compresseur, la turbine, les conduites et chacune des enceintes.

La figure 5 illustre la phase de stockage décrite dans la figure 1. Le gaz en provenance de la partie haute de la seconde enceinte entre dans le premier compresseur 3b à la température T2 au point A. Il est comprimé et ressort à la température T1 au point B. Il pénètre la masse de réfractaire 11 de la première enceinte 1, traverse la masse de réfractaire en cédant ses calories, ce qui engendre une descente progressive du front de température vers le bas. le gaz ressort en partie basse de ladite première enceinte en 6a à une température de l'ordre de 20/100°C, puis passe dans l'échangeur 6 où il cède à l'extérieur l'énergie E3 pour ressortir dudit échangeur à une température sensiblement constante T0 correspondant à la température ambiante de 20°C, correspondant au point C du diagramme. Il est ensuite turbiné en 3c et cède son énergie au compresseur 3b, et il ressort de la turbine dans la canalisation 2c à la température T3 (-50°C), correspondant au point D du diagramme. Il entre enfin en partie basse de la seconde enceinte, ou il récupère des calories au sein de la masse de réfractaires qu'il parcourt du bas vers le haut, ce qui engendre une remontée progressive du front de température 2e vers le haut. Le gaz ressort enfin de la seconde enceinte en partie haute et est dirigé vers le compresseur 3b, dans lequel il rentre à la température T2, avec le cas échéant un passage dans le réchauffeur 5b, où il reçoit le cas échéant un quota d'énergie E2 visant à réajuster ladite température du gaz pour atteindre la valeur T2. Le gaz est alors revenu au point A du diagramme et effectue alors un nouveau cycle.

Le cycle thermodynamique de restitution de l'énergie détaillé sur la figure 6 se déroule comme suit. Le gaz à haute température T1 quitte la première enceinte 1 par le haut, ce qui correspond au point B du diagramme. Le gaz est ensuite turbiné en 4c où il restitue l'énergie au générateur électrique (ER) et se retrouve au point A du diagramme à la température T2. Puis il entre par le haut de la seconde enceinte et cède ses calories à la masse de réfractaires 11, ce qui engendre une descente progressive du front de température 2e vers le bas, et ressort par le bas de ladite enceinte à une température T3 correspondant au point D du diagramme. Le gaz passe ensuite dans le deuxième compresseur 4b et ressort à une température T4 supérieure à la température T0 souhaitée : il passe alors dans l'échangeur de température 6 où il restitue à l'extérieur le quota d'énergie E4, pour se retrouver à la température T0, donc au point C dudit diagramme. Enfin, il pénètre par le bas dans la première enceinte où il récupère de l'énergie et s'échauffe pour atteindre le point B dudit diagramme, ce qui engendre une remontée progressive du front de température 1 e vers le haut, donc un refroidissement global de ladite première enceinte.

Sur la figure 7 on a représenté, sur la gauche en coupe en vue de côté, la première enceinte et le front montant 1e séparant la zone inférieure à la température d'environ 20°C, et la partie supérieure à la température d'environ 1300°C. Ce front montant correspond en fait à une zone de transition d'une hauteur h comme détaillé sur le graphique droit de la même figure 7. Lors de la phase de stockage de l'énergie, la zone de transition se déplace vers le bas (figure 7B), et lors de la phase de restitution elle se déplace vers le haut (figure 7A). De manière à rester dans les plages de fonctionnement des turbo-machines correspondant à leur meilleur rendement, avantageusement on ne charge complètement, ni ne décharge complètement la première enceinte, ce qui correspond, comme détaillé sur la figure 7B, à limiter le cycle de charge/décharge à la hauteur maximale $\delta H_1$, correspondant par exemple à 80-90% de la hauteur totale, donc de la capacité calorifique totale de ladite première enceinte. De même, cette zone de transition existe aussi dans la seconde enceinte mais elle correspond à des températures différentes, par exemple -50°C en partie basse, et 500°C en partie haute. Le pourcentage de la masse calorifique utilisé correspond alors à une hauteur $\delta H_2$, ledit pourcentage utilisé étant de préférence sensiblement identique à celui de ladite première enceinte, c'est-à-dire 80-90%.

Grâce à cette configuration incluant 2 enceintes à des températures différentes, dont les masses de matériaux réfractaires ne sont utilisées qu'à 80-90% de leur capacité calorifique, il est possible d'obtenir un rendement global très bon, de l'ordre de 75 à 85%.

Ceci est premièrement dû au fait que l'énergie est alternativement pompée et récupérée entre 2 niveaux de température T2 à T1 qui sont tous les deux largement supérieurs à la température ambiante. On sait d'après le théorème de Carnot que l'efficacité des machines thermiques s'améliore lorsque la température de la source chaude augmente.

Une seconde raison réside dans l'égalité des températures T1 et T2 durant les 2 phases de stockage/restitution, obtenues en utilisant des ensembles turbine-compresseur différents travaillant avec des rapports de pression différents (P1/P2 et P'1/P'2).

Une troisième raison de la bonne efficacité globale provient du fait que durant la phase de stockage les pertes du compresseur chaud 3b sont extraites sous forme de chaleur dans le gaz. Cette énergie est stockée dans le réfractaire de la première enceinte 1 au même titre que la chaleur pompée depuis la seconde enceinte. Cette perte d'énergie du compresseur chaud est en grande partie récupérée sous forme de travail utile durant la phase de restitution.

La quatrième raison résulte de l'utilisation de régénérateurs pour échanger la chaleur avec le gaz. Il est en effet possible d'aménager des ensembles de pièces réfractaires capables de fonctionner à très haute température et présentant une très grande surface d'échange entre le gaz et les solides. Ceci permet d'approcher au mieux l'égalité des températures T1 et T2 durant les 2 phases. La capacité de stockage est liée à la masse de réfractaire. La disposition selon l'invention présente l'avantage que la quasi-totalité de la masse de réfractaire est mise à profit pour jouer un double rôle : stockage de la chaleur et échange de chaleur avec le gaz.

La dernière raison du bon rendement global résulte du fait que le froid produit dans la détente de la turbine 3c durant la phase de stockage est également stocké dans l'enceinte 2. Durant la phase de restitution ceci permet de refroidir le gaz avant la compression par le compresseur 4b, ce qui diminue l'énergie absorbée par ce compresseur 4b, énergie qui vient en diminution de l'énergie restituée $E_R$.

La puissance d'une turbomachine est donnée par la formule:

$$W = m \cdot Cp \cdot (T2 - T1)$$

Où m est le débit massique de gaz en kg/s, Cp la capacité calorifique du gaz en J/kg/K, T1 la température du gaz à l'entrée et T2 celle à la sortie. Pour une turbine, T2 < T1 et W est alors négatif (puissance extraite du gaz). Pour un compresseur W est positif (puissance fournie au gaz).

La densité du gaz est proportionnelle à la masse molaire du gaz. Or, il est plus facile de comprimer ou de détendre un gaz lourd qu'un gaz léger. Les machines nécessaires sont plus petites et plus économiques avec un gaz lourd qu'avec un gaz léger.

La masse molaire est respectivement de 40 pour l'argon, de 44 pour le CO2, de 84 pour le krypton, de 131 pour le xénon et de 222 pour le radon.

Ainsi une turbomachine utilisant comme gaz le krypton ou le xénon sera beaucoup plus compacte qu'avec un gaz de type hélium de masse molaire 4, ou d'azote de masse molaire 28. De plus dans la formule thermodynamique : $PV^\gamma$ = constante,

$\gamma$ =1.66 pour un gaz mono-atomique,
$\gamma$ =1.4 pour un gaz di-atomique, et
$\gamma$ =1.33 pour un gaz tri-atomique,

Le rapport des températures T1, T2 dépend du rapport des pressions P1, P2 ou P'1, P'2 selon la formule :

$$\frac{T1}{T2} = \left( \frac{P1}{P2} \right)^{\frac{\gamma-1}{\gamma}}$$

On constate que pour un rapport de températures donné, le rapport des pressions est plus faible pour un gaz monoatomique ($\gamma$ = 1,66) que pour un gaz diatomique ($\gamma$ = 1,4) ou triatomique ($\gamma$ = 1,33). Ceci présente un intérêt pratique pour la conception des enceintes. En effet, l'épaisseur des parois des enceintes est liée à la pression maximale du gaz. De plus, ce procédé ayant la capacité de stocker de très grandes quantités d'énergie mettra en oeuvre des enceintes de grandes dimensions. On a donc économiquement intérêt à rechercher le niveau minimal de pression interne du gaz. Un moyen simple de parvenir à ce résultat est de limiter le taux de compression du gaz, donc de choisir de préférence un gaz monoatomique.

Ainsi, le meilleur cycle sera obtenu avec un gaz mono- atomique, tel l'hélium, le néon, l'argon ou les autres gaz rares de masse molaire plus élevée.

Les gaz di-atomiques tel l'azote et tri-atomique tel l'air ou le CO2 sont très abondants et bon marché, mais à haute température, sont agressifs vis-à-vis des métaux constituant l'enveloppe des enceintes, les canalisations ou les aubes des turbines et compresseurs, c'est pourquoi on utilise avantageusement comme gaz au sein du dispositif un gaz neutre totalement inerte vis-à-vis des éléments métalliques du dispositif, tel l'hélium, le néon, l'argon ou les autres gaz rares de masse molaire plus élevée. Hélium, néon et argon sont présents dans l'air ambiant en pourcentages significatifs et ils sont disponibles en grande quantité à des couts acceptables. Dans ces trois gaz, l'argon représente le gaz le plus performant pour son utilisation dans le dispositif selon l'invention, car il est monoatomique, il est inerte à haute et très haute température vis-à-vis des éléments métalliques composant le dispositif selon l'invention et il présente une masse molaire élevée ainsi qu'un coût d'acquisition faible.

Ledit premier matériau réfractaire de la première enceinte est par exemple de la chamotte, encore appelée argile de deuxième cuisson (« fire clay ») capable de résister à 1200 °C ou encore un produit à haute teneur en alumine et/ou magnésie. Le deuxième matériau réfractaire dans la deuxième enceinte peut être de l'argile de première cuisson.

Comme mentionné précédemment, les matériaux réfractaires 11 se présentent sous forme de briques perforées par des canaux parallèles de 5 à 20 mm de diamètre et traversants de part en part, et disposés de manière à permettre la circulation et le passage du gaz à travers le canaux dans la direction longitudinale de l'enceinte.

Les divers types de matériaux réfractaires à très haute température disponibles à des conditions économiques acceptables sont listés dans le tableau ci-dessous.

| Produit | Composition | T limite | Densité Kg . m$^{-3}$ | Capacité calorifique (J · kg$^{-1}$ . K$^{-1}$) | Capacité calorifique (kJ · m$^{-3}$ · K$^{-1}$) |
|---|---|---|---|---|---|
| Chamotte | Argile cuite (35% Al$_2$O$_3$) | 1250°C | 2000 | 1000 | 2000 |
| Magnésie | MgO | 1800°C | 3000 | 1200 | 3600 |
| Dolomie | CaO-MgO | 1800°C | 2700 | 1100 | 2970 |
| Mullite | 70% Al$_2$O$_3$ | 1700°C | 2600 | 1088 | 2830 |
| Carbone | C | 2200°C | 2200 | 1300 | 2860 |

La chamotte reste le plus économique de tous ces produits, mais sa température maximale reste très nettement inférieure à celle des autres.

De plus, l'énergie stockée dans un mètre cube de réfractaire est donnée par la formule : $E = V . Cp . (T - T0)$ dans laquelle E est exprimé en joules, V est le volume de réfractaire chauffé, Cp la capacité calorifique en J/m3/K, T la température de chauffage et T0 la température initiale avant chauffage.

On constate ainsi que plus la température de stockage T est élevée, plus l'énergie stockée par unité de volume de réfractaire est importante.

Ainsi, la magnésie de température limite 1 800°C présente la meilleure performance en terme de capacité calorifique volumique avec une valeur Cp= 3 600 kJ * m$^{-3}$ * K$^{-1}$.

A titre d'exemple, un dispositif de 3000 MWh de capacité, capable de stocker et de restituer une puissance de 100 MW, correspondant à une charge en 40 heures et une restitution en 30 heures est constitué :

- d'une première enceinte cylindrique de 41m de diamètre et de 20m de hauteur, dans laquelle est installé 16500 m3 de magnésie, présentant une porosité de 25%, soit 37000t de matériaux réfractaires, et

- d'une seconde enceinte de 48m de diamètre et de 20m de hauteur dans laquelle est installé 22500 m3 de chamotte, présentant une porosité de 35%, soit 29500 t de matériaux réfractaires, un groupe de stockage composé d'un moteur électrique 3a de 100MW, un compresseur 3b de 117MW, une turbine 3c de 17MW, d'un groupe de restitution composé d'une génératrice 4a de 100MW, d'une turbine 4c de 156MW, d'un compresseur 4b de 56MW. Le volume interne de l'installation complète, y compris les conduites de raccordement, mais excluant le volume correspondant à la masse effective de réfractaire est d'environ 35000 m$^3$. Une partie du gaz est confinée au sein des matériaux isolants qui isolent les parois des enceintes des réfractaires chauds (environ 12000 m3) et seul un volume libre de 23000 m3 peut participer à la circulation du gaz. L'installation est chargée en argon avant démarrage à la pression de 1 bar, soit 2 baras, ce qui correspond à un volume de 70000Nm$^3$ dont 46000 Nm$^3$ peuvent circuler. En phase de stockage la pression est de 3 baras dans la première enceinte P1 et de 0,9 baras dans la seconde P2, tandis que durant le déchargement, ces pressions sont respectivement 3,3 (P'1) et 0,6 (P'2) baras. La température T1 s'établit à 1256°C tandis que la température T2 est de 600°C. En phase de stockage le débit de gaz dans la turbine 3c ou le compresseur 3b est de 193 Nm$^3$/s, c'est-à-dire à un temps de cycle thermodynamique selon la figure 5 de 238 secondes, ce qui correspond à 600 cycles de circulation du gaz pour la durée d'un chargement complet. On obtient des valeurs similaires pour le cycle de déchargement.

Les turbines et les compresseurs centrifuges ou axiaux sont en général limités en température en raison de l'agressivité des gaz résultant de la combustion, mais dans le dispositif selon l'invention, on opère lesdites turbines et lesdits compresseurs en circuit fermé avec un gaz neutre tel l'argon, ce qui autorise pour ces machines des points de fonctionnement à température beaucoup plus élevés que dans l'art antérieur.

L'énergie stockée dans les première et seconde enceintes n'est pas perdue sauf en cas d'inactivité prolongée du dispositif en chargement-déchargement, les pertes s'effectuant alors vers le milieu extérieur, principalement par le biais de l'isolant 12 desdites enceintes.

Comme le procédé intéresse essentiellement le stockage d'énergie en grande quantité, les enceintes sont relativement volumineuses ce qui veut dire que le rapport surface sur volume est faible. Les pertes thermiques pour les grandes enceintes ne représentent qu'une faible fraction de l'énergie stockée. L'isolation thermique est réalisée avec des matériaux présentant une grande porosité, comme des feutres de fibres céramiques ou des mousses céramiques. Les calculs montrent que pour l'exemple cité précédemment une isolation de 2m d'épaisseur avec des matériaux fibreux classiques permet de limiter la perte d'énergie à moins de 1% par jour.

Comme le gaz est neutre, le gros compresseur 3b et la grosse turbine 4c qui travaillent à température élevée peuvent être avantageusement réalisés avec des matériaux à base de carbone. Ce corps résiste en effet mécaniquement aux températures très élevées, jusqu'à plus de 2000°C. Il n'est habituellement pas utilisé pour construire des turbomachines car il s'oxyde rapidement dans les gaz oxydants, tel l'air ou les produits résultant de la combustion. Cette limitation n'intervient pas ici ce qui permet d'envisager son usage. Des turbines en carbone ont déjà été réalisées à titre expérimental, ou encore pour des moteurs fusées dont la durée de vie n'est que de quelques minutes. Dans cette application selon l'invention, de telles turbines ou compresseurs n'auraient pas de limitation de durée de vie. Dans les machines actuelles réalisées avec des matériaux métalliques, il est nécessaire de refroidir les aubages par une circulation interne de gaz froid ce qui est au détriment du rendement. Malgré cela, les aubages mobiles ont une durée de vie limitée due au phénomène du fluage.

Dans la figure 1 on a décrit deux réchauffeurs 5a-5b séparés, mais on peut mettre en avant un même et unique réchauffeur, dès lors que l'on adapte le cheminement des conduites.

## Revendications

1. Installation de stockage et restitution d'énergie électrique, **caractérisée en ce qu'**elle comprend :

   - deux première et seconde enceintes (1,2) contenant un gaz et des premier et second matériaux réfractaires poreux (11) aptes à transférer des calories thermiques par contact entre lesdits matériaux réfractaires poreux et un gaz circulant à travers lesdites enceintes, et
   - un circuit fermé de canalisations (1c, 1c', 2c, 2c', 1d, 1d', 2d, 2d') permettant la circulation d'un gaz traversant successivement chacune des deux enceintes d'une extrémité à l'autre, et
   - des moyens de compression (3b, 4b) et des moyens de détente (3c, 4c) du gaz circulant dans les dites canalisations entre chacune des extrémités d'une enceinte reliée à une extrémité de l'autre enceinte, et
   - de préférence, des premiers moyens de chauffage de gaz aptes à chauffer le gaz circulant dans ladite seconde enceinte (5a), et
   - de préférence encore, des moyens de refroidissement (6) de gaz circulant entre une des extrémités de la première enceinte et desdits moyens de compression (4b) et moyens de détente (3c), aptes à refroidir du gaz sortant de ladite première enceinte à cette extrémité avant d'être détendu dans lesdits moyens de détente (3c) ou respectivement du gaz entrant dans ladite première enceinte après avoir été compressé par desdits moyens de compression (4b).

2. Installation de stockage et restitution d'énergie selon la revendication 1, **caractérisée en ce qu'**elle comprend :

   - A) une première enceinte calorifugée (1) remplie d'un premier matériau réfractaire poreux apte à être traversée par un gaz circulant à travers ladite première enceinte entre 2 extrémités supérieure et inférieure ($1_1,1_2$) de ladite première enceinte, et
   - B) une seconde enceinte calorifugée (2) remplie d'un second matériau réfractaire poreux apte à être traversée par un gaz circulant à travers ladite seconde enceinte entre 2 extrémités supérieure et inférieure de ladite seconde enceinte ($2_1,2_2$), et
   - C) des canalisations calorifugées (1c, 1c', 2c, 2c', 1d, 1d', 2d, 2d') permettant la circulation de gaz en circuit fermé entre les 2 enceintes comprenant des premières et secondes canalisations supérieures (1d- 1d', 2d- 2d') entre les extrémités supérieures ($1_1$, $2_1$) des deux enceintes et des premières et secondes canalisations inférieures (1c- 1c', 2c- 2c') entre les extrémités inférieures ($1_2$, $2_2$) des deux enceintes , et
   - D) de préférence, des premiers moyens de chauffage de gaz (5a) aptes à chauffer du gaz à l'intérieure de la dite seconde enceinte, et
   - E) des premiers moyens de compression de gaz (3) comprenant un premier moteur électrique (3a) apte à être alimenté par une énergie électrique à stocker (E1) pour actionner un premier compresseur (3b) apte à compresser un gaz provenant de ladite extrémité supérieure ($2_1$) de la seconde enceinte par une dite seconde canalisation supérieure (2d) pour l'envoyer à ladite extrémité supérieure ($1_1$) de la première enceinte par une dite première canalisation supérieure (1d), et
   - F) des premiers moyens de détente de gaz (3c) comprenant une première turbine (3c) apte à détendre le gaz provenant de ladite extrémité inférieure ($1_2$) de la première enceinte par une première canalisation inférieure (1c) pour l'envoyer à ladite extrémité inférieure ($2_2$) de la seconde enceinte par une seconde canalisation inférieure (2c), et

- G) des seconds moyens de compression de gaz (4b) aptes à compresser le gaz provenant de la dite extrémité inférieure ($2_2$) de la seconde enceinte par une autre seconde canalisation inférieure (2c, 2c') pour l'envoyer à ladite extrémité inférieure ($1_2$) de la première enceinte par une autre première canalisation inférieure (1 c, 1 c'), et

- H) des seconds moyens de détente de gaz comprenant une seconde turbine (4c) apte à détendre le gaz provenant de ladite extrémité supérieure ($1_1$) de la première enceinte par une autre première canalisation supérieure (1d, 1d') pour l'envoyer à ladite extrémité supérieure ($2_1$) de la seconde enceinte par une autre seconde canalisation supérieure (2d, 2d'), lesdits seconds moyens de détente étant aptes à actionner un générateur électrique (4a) apte à restituer de l'énergie électrique ($E_R$), et

- I) des moyens de refroidissement de gaz de préférence un échangeur thermique (6) aptes à refroidir du gaz circulant dans desdites premières canalisations inférieures (1c, 1 c') entre d'une part l'extrémité inférieure ($1_2$) de la première enceinte et d'autre part les sortie et entrée desdits second compresseur (4b) et respectivement première turbine (3c).

3. Installation de stockage et restitution d'énergie électrique selon la revendication 2 **caractérisée en ce qu'**elle comprend des seconds moyens de chauffage de gaz (5b) aptes à chauffer le gaz circulant dans une dite seconde canalisation supérieure (2d) entre l'extrémité supérieure de ladite seconde enceinte et ledit premier compresseur (3b).

4. Installation de stockage et restitution d'énergie électrique selon la revendication 2 ou 3 **caractérisée en ce que** ladite première turbine (3c) est apte à être actionnée par ledit premier compresseur (3b) auquel elle est couplée mécaniquement.

5. Installation de stockage et restitution d'énergie électrique selon l'une des revendications 2 à 4 **caractérisée en ce que** ladite seconde turbine (4c) est couplée à un moteur électrique auxiliaire (4d) apte à l'actionner.

6. Installation de stockage et restitution d'énergie électrique selon l'une des revendications 2 à 5 **caractérisée en ce que** ledit second compresseur (4b) est actionné par ladite seconde turbine (4c) à laquelle il est couplé mécaniquement.

7. Installation de stockage et restitution d'énergie électrique selon l'une des revendications 1 à 6 **caractérisé en ce qu'**elle est remplie d'un gaz neutre, de préférence de l'argon.

8. Installation de stockage et restitution d'énergie électrique selon l'une des revendications 2 à 7 **caractérisée en ce que** lesdits première enceinte et premier matériau réfractaire poreux sont capables de résister à une température T1 d'au moins 750°C, de préférence d'au moins 750 à 2000°C, de préférence encore de 1000 à 1500°C et ladite seconde turbine est dimensionnée pour détendre un gaz à la dite température T1 tandis que ladite première turbine de moindre capacité que la seconde turbine est dimensionnée pour détendre un gaz de la température ambiante T0 à une température T3 de -80 à -20°C.

9. Installation de stockage et restitution d'énergie électrique selon l'une des revendications 2 à 8 **caractérisés en ce que** lesdites seconde enceinte et second matériau réfractaire poreux sont capables de résister à une température T2 d'au moins 400°C, de préférence d'au moins 400°C à 1000°C, de préférence encore de 500 à 700°C, et ledit premier compresseur est dimensionné pour compresser un gaz à ladite température T2 tandis que ledit second compresseur de moindre capacité que le premier compresseur est dimensionné pour compresser un gaz de la température T3 de -80 à -20°C. à la température ambiante.

10. Installation de stockage et restitution d'énergie électrique selon l'une des revendications 2 à 9 **caractérisée en ce que** ledit premier compresseur est apte à délivrer un débit volumique plus important que ladite première turbine et ladite seconde turbine est apte à délivrer un débit volumique plus important que ledit second compresseur et lesdits premier compresseur et seconde turbine sont réalisés en carbone.

11. Installation de stockage et restitution d'énergie électrique selon l'une des revendications 1 à 10 **caractérisée en ce que** lesdits premier et second matériaux réfractaires poreux présentent une porosité de 20 à 60 %.

12. Installation de stockage et restitution d'énergie électrique selon la revendication 11 **caractérisée en ce que** lesdits premier et second matériaux réfractaires poreux sont constitués de briques poreuses (11) assemblées les unes contre les autres, de préférence traversées de perforations cylindriques ($11_1$) disposées parallèlement dans une même direction longitudinale que ladite enceinte dans laquelle elles sont assemblées, lesdites perforations étant de préférence encore de diamètre 5 à 20 mm .

13. Installation de stockage et restitution d'énergie électrique selon l'une des revendications 1 à 12 **caractérisée en ce que** lesdits premier et second matériaux réfractaires poreux sont constitués d'argile cuit à teneurs élevées en composés choisis parmi les magnésie, alumine et chaux.

14. Installation de stockage et restitution d'énergie électrique selon l'une des revendications 1 à 13 **caractérisée en ce que** ledit premier matériau réfractaire poreux est constitué d'argile de seconde cuisson ou chamotte.

15. Installation de stockage et restitution d'énergie électrique selon l'une des revendications 1 à 14 **caractérisée en ce que** ledit second matériau réfractaire poreux est constitué d'argile de première cuisson.

16. Installation de stockage et restitution d'énergie électrique selon l'une des revendications 1 à 15 **caractérisée en ce que** lesdites première et seconde enceintes ont un volume chacune d'au moins 5000 m3, de préférence de 10000 à 45000 m3.

17. Procédé de stockage d'énergie électrique (E1) sous forme d'énergie thermique dans lequel on utilise une installation selon l'une des revendications 1 à 16 **caractérisée en ce que**, après une étape initiale de préchauffage du gaz de ladite deuxième enceinte que l'on chauffe à température $T_2$, ladite installation étant remplie d'un gaz permanent, initialement à température ambiante $T_0$ on réalise les étapes successives dans lesquelles:

1) le gaz sortant de l'extrémité supérieure $(2_1)$ de la seconde enceinte (2) à une température $T_2$ est chauffé à une température $T_1$ supérieure à une température $T_2$ par compression dans un dit premier compresseur (3b) avant d'être envoyé à l'extrémité supérieure $(1_1)$ de ladite première enceinte, dans laquelle il s'établit une pression P1 supérieure à la pression P2 de la deuxième enceinte, ledit premier compresseur (3b) étant entraîné par un premier moteur électrique (3a) alimenté par l'énergie électrique à stocker (E1), et

2) le gaz traverse de part en part ladite première enceinte entre ladite extrémité supérieure $(1_1)$ et sa dite extrémité inférieure $(1_2)$ et il ressort de ladite extrémité inférieure $(1_2)$ de la première enceinte à une température ambiante T0 ou une température T'1 supérieure à T0 mais inférieure à T2, et

3) le gaz est ensuite refroidi le cas échéant à une température ambiante T0 grâce à desdits moyens de refroidissement de gaz (6) de préférence du type échangeur de chaleur, en aval de la sortie de l'extrémité inférieure $(1_2)$ de la première enceinte, et

4) le gaz est ensuite détendu à travers une dite première turbine (3c), de préférence entraînée par ledit premier compresseur (3b), à ladite pression P2 de la seconde enceinte inférieure à la pression P1, le gaz se trouve ainsi refroidi à une température T3 inférieure à T0 avant d'entrer dans ladite seconde enceinte par son extrémité inférieure $(2_2)$, et

5) on fait circuler le gaz à travers ladite seconde enceinte entre lesdites extrémités inférieure $(2_2)$ et supérieure $(2_1)$ de la deuxième enceinte, ce qui a pour effet d'augmenter le volume de matériau réfractaire de la partie inférieure (2b) de ladite seconde enceinte refroidie à la température T3, et de diminuer celui de sa partie supérieure (2a) à la température T2 ou T'2 inférieure à T2 mais supérieure à T0 et T'1, et si nécessaire, le cas échéant on réchauffe à la température T2 le gaz sortant de la seconde enceinte à la température T'2 ,à l'aide de seconds moyens de chauffage de gaz (5b) et

6) on réitère les étapes 1) à 5) ci-dessus jusqu'à ce que la partie supérieure (1a) de la première enceinte réchauffée à la température T1 occupe au moins 80% du volume de ladite première enceinte, et que la partie inférieure (2b) de la seconde enceinte refroidie à la température T3 occupe au moins 80% du volume de la seconde enceinte.

18. Procédé selon la revendication 17 **caractérisé en ce que**, à l'étape 6), on interrompt le stockage de manière à ce que la partie inférieure (1b) de la première enceinte à ladite température T'1 représente au moins 10% du volume de la première enceinte, de préférence 10 à 20% du volume de la première enceinte, et/ou la partie supérieure (2a) de la seconde enceinte à la température (T2) représente moins de 20%, de préférence de 10 à 20% du volume de ladite seconde enceinte.

19. Procédé selon l'une des revendications 17 ou 18 **caractérisé en ce que** lesdites températures T1 et T2 sont telles que T1/T2=1,5 à 3 et T1/T0 est supérieur à 2, de préférence supérieur à 3 et de préférence encore inférieur à 6 et P1/P2 est de 2 à 4.

**20.** Procédé selon l'une des revendications 17 à 19 **caractérisé en ce que** T1 est de 750°C à 2000°C, de préférence de 1000 à 1500°C, et T2 est de 400 à 1000 °C, de préférence de 500 à 700 °C.

**21.** Procédé selon la revendication 19 ou 20 **caractérisé en ce que** la pression P1 est de 2 à 4 bar absolu ($2.10^5$ à $4.10^5$ Pa) et P2 est de 0,5 à 1,5 bar absolu ($0.5.10^5$ à $1.5.10^5$ Pa).

**22.** Procédé selon l'une des revendications 17 à 21 **caractérisé en ce que** T0 est de 10° à 50 °C et T3 est de -80°C à -20°C, T'1 étant le cas échéant de 20° à 150°C.

**23.** Procédé selon l'une des revendications 17 à 21 **caractérisé en ce que** l'on stocke une quantité d'énergie électrique de 20 MW-hr à 10.000 MW-hr.

**24.** Procédé de restitution d'une énergie électrique ($E_R$) à partir d'une énergie thermique stockée par un procédé selon l'une des revendications 17 à 23 **caractérisé en ce que**, après une phase initiale de démarrage dans laquelle on actionne ledit second compresseur (4b) et dite deuxième turbine (4c) avec le dit moteur électrique auxiliaire (4d), au cours de laquelle phase initiale on établit un gradient de pression entre la pression P'1 de la première enceinte et une pression P'2 inférieure à P'1 de la deuxième enceinte, tel que P'1 est supérieure à P'2, de préférence P'1 étant supérieur à P1 et P'2 étant inférieur à P2 , on réalise les étapes successives dans lesquelles :

1) le gaz sortant par l'extrémité supérieure ($1_1$) de la première enceinte (1) à la dite température T1 est détendu et refroidi à la température T2 à travers la deuxième turbine (4c), et ladite deuxième turbine (4c) actionne un dit générateur d'électricité (4a) permettant de délivrer une énergie électrique restituée ($E_R$), et

2) le gaz traverse ladite deuxième enceinte depuis son extrémité supérieure ($2_1$) jusqu'à son extrémité inférieure ($2_2$), une partie supérieure (2a) de la deuxième enceinte étant réchauffée à ladite température T2, une partie inférieure (2b) de la deuxième enceinte restant à ladite température T3 et,

3) le gaz sortant de l'extrémité inférieure ($2_2$) de ladite deuxième enceinte à son extrémité inférieure ($2_2$) à la température T3 est ensuite comprimé en passant par ledit deuxième compresseur (4b) de préférence actionné par l'énergie libérée par la deuxième turbine (4c), de manière à le réchauffer à une température T4 supérieure à une température ambiante T0 et le cas échéant supérieur à T'1, mais inférieure à T2 en sortie dudit deuxième compresseur (4b), et

4) de préférence, le gaz est ensuite refroidi à la température ambiante T0 ou T'1 grâce à des dits moyens de refroidissement (6) avant d'être introduit dans ladite première enceinte (1) par son extrémité inférieure ($1_2$) pour rejoindre la partie inférieure (1b) de ladite première enceinte qui se trouve à ladite température T'1, et

5) on fait circuler le gaz à travers ladite première enceinte, ce qui a pour effet d'augmenter le volume de matériau réfractaire de la partie inférieure (1b) à ladite température T'1 et de diminuer le volume de matériau réfractaire de la partie supérieure (1a) à ladite température chaude T1, et

6) on réitère les étapes 1) à 5) ci-dessus jusqu'à ce que la partie inférieure (1b) de la première enceinte à ladite température (T1) représente au moins 80% du volume de la première enceinte et la partie supérieure (2a) de ladite deuxième enceinte à ladite température (T2) représente au moins 80% en volume de ladite deuxième enceinte.

**25.** Procédé selon la revendication 24 **caractérisé en ce que**, à l'étape 6, on interrompt le procédé de restitution d'énergie de façon à ce qu'on maintienne une partie supérieure (1a) de la première enceinte à une dite température T1, ladite partie supérieure (1a) représentant moins de 20%, de préférence de 10 à 20%, en volume de ladite première enceinte, et/ou une partie inférieure (2b) de la deuxième enceinte à ladite température froide T3 représente moins de 20%, de préférence de 10 à 20%, de volume de la deuxième enceinte.

**26.** Procédé selon l'une des revendications. 24 ou 25 **caractérisé en ce que** le rendement de restitution d'énergie électrique par ledit générateur d'électricité (4a) $E_R/E_1$ est supérieur à 60%, de préférence de 75 à 85%.

**27.** Procédé selon l'une des revendications 24 à 26 **caractérisé en ce que** P'1/P'2 est de 3 à 5.

**28.** Procédé selon l'une des revendications 24 à 27 **caractérisé en ce que** T4 est de 150 à 400°C.

**29.** Procédé selon l'une des revendications 24 à 28 **caractérisé en ce que** la pression P'1 est de 3 à 5 bar absolu ($3.10^5$ à $5.10^5$ Pa) et P'2 est de 1 à 1,5 bar absolu ($1.10^5$ à $1.5.10^5$ Pa).

**Patentansprüche**

1. Anlage zur Speicherung und Wiedergewinnung von elektrischer Energie, **dadurch gekennzeichnet, daß** sie umfaßt:

   - zwei Räume, einen ersten und einen zweiten (1, 2), die ein Gas sowie ein erstes und ein zweites poröses feuerfestes Material (11) enthalten, welche geeignet sind, durch Kontakt zwischen den porösen feuerfesten Materialien und einem durch die Räume zirkulierenden Gas Wärme zu übertragen, und
   - einen geschlossenen Kreis aus Rohrleitungen (1c, 1c', 2c, 2c', 1 d, 1d', 2d, 2d'), der das Zirkulieren eines Gases, das nacheinander einen jeden der beiden Räume von einem Ende zum anderen durchströmt, ermöglicht, sowie
   - Mittel zum Komprimieren (3b, 4b) und Mittel zum Entspannen (3c, 4c) des Gases, das in den Rohrleitungen zwischen jedem der Enden eines Raums, das mit einem Ende des anderen Raums verbunden ist, zirkuliert, und
   - vorzugsweise erste Gaserhitzungsmittel, die geeignet sind, das in dem zweiten Raum (5a) zirkulierende Gas zu erhitzen, und
   - weiterhin vorzugsweise Mittel zum Abkühlen (6) von Gas, das zwischen einem der Enden des ersten Raums und Kompressionsmitteln (4b) und Entspannungsmitteln (3c) zirkuliert, die geeignet sind, an diesem Ende aus dem ersten Raum austretendes Gas zu kühlen, bevor es in den Entspannungsmitteln (3c) entspannt wird bzw. in den ersten Raum eintretendes Gas zu kühlen, nachdem es durch die Kompressionsmittel (4b) komprimiert worden ist.

2. Anlage zur Speicherung und Wiedergewinnung von Energie nach Anspruch 1, **dadurch gekennzeichnet, daß** sie umfaßt:

   - A) einen mit einem ersten porösen feuerfesten Material gefüllten wärmeisolierten ersten Raum (1), der geeignet ist, von einem Gas durchströmt zu werden, das durch den ersten Raum zwischen 2 Enden, einem oberen und einem unteren ($1_1$, $1_2$) des ersten Raums zirkuliert,
   - B) einen mit einem zweiten porösen feuerfesten Material gefüllten wärmeisolierten zweiten Raum (2), der geeignet ist, von einem Gas durchströmt zu werden, das durch den zweiten Raum zwischen 2 Enden, einem oberen und einem unteren ($2_1$, $2_2$) des zweiten Raums zirkuliert, und
   - C) wärmeisolierte Rohrleitungen (1c, 1c', 2c, 2c', 1 d, 1d', 2d, 2d'), die das Zirkulieren von Gas im geschlossenen Kreislauf zwischen den 2 Räumen ermöglichen, umfassend erste und zweite obere Rohrleitungen (1d-1d', 2d-2d') zwischen den oberen Enden ($1_1$, $2_1$) der beiden Räume sowie erste und zweite untere Rohrleitungen (1c-1c', 2c-2c') zwischen den unteren Enden ($1_2$, $2_2$) der beiden Räume, und
   - D) vorzugsweise erste Gaserhitzungsmittel (5a), die geeignet sind, Gas innerhalb des zweiten Raums zu erhitzen, und
   - E) erste Gaskompressionsmittel (3), die einen ersten Elektromotor (3a) umfassen, welcher geeignet ist, mit einer zu speichernden elektrischen Energie (E1) gespeist zu werden, um einen ersten Verdichter (3b) anzutreiben, der geeignet ist, ein über eine zweite obere Rohrleitung (2d) aus dem oberen Ende ($2_1$) des zweiten Raums kommendes Gas zu komprimieren, um es über eine erste obere Rohrleitung (1 d) zu dem oberen Ende ($1_1$) des ersten Raums zu leiten, und
   - F) erste Gasentspannungsmittel (3c), die eine erste Turbine (3c) umfassen, welche geeignet ist, das über eine erste untere Rohrleitung (1c) von dem unteren Ende ($1_2$) des ersten Raums kommende Gas zu entspannen, um es über eine zweite untere Rohrleitung (2c) zu dem unteren Ende ($2_2$) des zweiten Raums zu leiten, und
   - G) zweite Gaskompressionsmittel (4b), die geeignet sind, das über eine weitere zweite untere Rohrleitung (2c, 2c') von dem unteren Ende ($2_2$) des zweiten Raums kommende Gas zu komprimieren, um es über eine weitere erste untere Rohrleitung (1c, 1c') zu dem unteren Ende ($1_2$) des ersten Raums zu leiten, und
   - H) zweite Gasentspannungsmittel, die eine zweite Turbine (4c) umfassen, welche geeignet ist, das über eine weitere erste obere Rohrleitung (1d, 1d') von dem oberen Ende ($1_1$) des ersten Raums kommende Gas zu entspannen, um es über eine weitere zweite obere Rohrleitung (2d, 2d') zu dem oberen Ende ($2_1$) des zweiten Raums zu leiten, wobei die zweiten Entspannungsmittel geeignet sind, einen elektrischen Generator (4a) anzutreiben, der geeignet ist, elektrische Energie (ER) wiederzugewinnen, und
   - I) Gasabkühlmittel, vorzugsweise einen Wärmetauscher (6), die geeignet sind, Gas, welches in ersten unteren Rohrleitungen (1c, 1c') zwischen einerseits dem unteren Ende ($1_2$) des ersten Raums und andererseits den Aus- und Eingängen des zweiten Verdichters (4b) bzw. der ersten Turbine (3c) zirkuliert, zu kühlen.

3. Anlage zur Speicherung und Wiedergewinnung von elektrischer Energie nach Anspruch 2, **dadurch gekennzeichnet, daß** sie zweite Gaserhitzungsmittel (5b) umfaßt, die geeignet sind, das in einer zweiten oberen Rohrleitung (2d) zwischen dem oberen Ende des zweiten Raums und dem ersten Verdichter (3b) zirkulierende Gas zu erhitzen.

4. Anlage zur Speicherung und Wiedergewinnung von elektrischer Energie nach Anspruch 2 oder 3, **dadurch gekennzeichnet, daß** die erste Turbine (3c) geeignet ist, über den ersten Verdichter (3b), mit dem sie mechanisch gekoppelt ist, angetrieben zu werden.

5. Anlage zur Speicherung und Wiedergewinnung von elektrischer Energie nach einem der Ansprüche 2 bis 4, **dadurch gekennzeichnet, daß** die zweite Turbine (4c) mit einem Hilfselektromotor (4d) gekoppelt ist, der geeignet ist, sie anzutreiben.

6. Anlage zur Speicherung und Wiedergewinnung von elektrischer Energie nach einem der Ansprüche 2 bis 5, **dadurch gekennzeichnet, daß** der zweite Verdichter (4b) über die zweite Turbine (4c), mit der er mechanisch gekoppelt ist, angetrieben wird.

7. Anlage zur Speicherung und Wiedergewinnung von elektrischer Energie nach einem der Ansprüche 1 bis 6, **dadurch gekennzeichnet, daß** sie mit einem Neutralgas, vorzugsweise Argon gefüllt ist.

8. Anlage zur Speicherung und Wiedergewinnung von elektrischer Energie nach einem der Ansprüche 2 bis 7, **dadurch gekennzeichnet, daß** der erste Raum und das erste poröse feuerfeste Material in der Lage sind, einer Temperatur $T1$ von wenigstens 750 °C, vorzugsweise von wenigstens 750 bis 2000 °C, weiterhin vorzugsweise von 1000 bis 1500 °C standzuhalten und die zweite Turbine dazu ausgelegt ist, ein Gas auf die Temperatur $T1$ zu entspannen, während die erste Turbine mit einer geringeren Kapazität als die zweite Turbine dazu ausgelegt ist, ein Gas von der Umgebungstemperatur $T0$ auf eine Temperatur $T3$ von -80 bis -20 °C zu entspannen.

9. Anlage zur Speicherung und Wiedergewinnung von elektrischer Energie nach einem der Ansprüche 2 bis 8, **dadurch gekennzeichnet, daß** der zweite Raum und das zweite poröse feuerfeste Material in der Lage sind, einer Temperatur $T2$ von wenigstens 400 °C, vorzugsweise von wenigstens 400 °C bis 1000 °C, weiterhin vorzugsweise von 500 bis 700 °C standzuhalten und der erste Verdichter dazu ausgelegt ist, ein Gas auf die Temperatur $T2$ zu komprimieren, während der zweite Verdichter mit einer geringeren Kapazität als der erste Verdichter dazu ausgelegt ist, ein Gas von der Temperatur $T3$ von -80 bis -20 °C auf die Umgebungstemperatur zu komprimieren.

10. Anlage zur Speicherung und Wiedergewinnung von elektrischer Energie nach einem der Ansprüche 2 bis 9, **dadurch gekennzeichnet, daß** der erste Verdichter geeignet ist, einen größeren Volumenstrom als die erste Turbine bereitzustellen, und die zweite Turbine geeignet ist, einen größeren Volumenstrom als der zweite Verdichter bereitzustellen, und der erste Verdichter und die zweite Turbine aus Kohlenstoff ausgebildet sind.

11. Anlage zur Speicherung und Wiedergewinnung von elektrischer Energie nach einem der Ansprüche 1 bis 10, **dadurch gekennzeichnet, daß** das erste und das zweite poröse feuerfeste Material eine Porosität von 20 bis 60 % aufweisen.

12. Anlage zur Speicherung und Wiedergewinnung von elektrischer Energie nach Anspruch 11, **dadurch gekennzeichnet, daß** das erste und das zweite poröse feuerfeste Material von aneinander gefügten porösen Ziegeln (11) gebildet sind, die vorzugsweise von zylindrischen Löchern ($11_1$) durchzogen sind, welche in einer gleicher Längsrichtung wie der Raum, in dem sie zusammengefügt sind, parallel angeordnet sind, wobei die Löcher weiterhin vorzugsweise einen Durchmesser von 5 bis 20 mm aufweisen.

13. Anlage zur Speicherung und Wiedergewinnung von elektrischer Energie nach einem der Ansprüche 1 bis 12, **dadurch gekennzeichnet, daß** das erste und das zweite poröse feuerfeste Material von gebranntem Ton mit hohen Gehalten an Verbindungen, welche aus Magnesiumoxid, Aluminiumoxid und Kalk ausgewählt sind, gebildet sind.

14. Anlage zur Speicherung und Wiedergewinnung von elektrischer Energie nach einem der Ansprüche 1 bis 13, **dadurch gekennzeichnet, daß** das erste poröse feuerfeste Material von Ton aus zweitem Brennvorgang oder Schamotte gebildet ist.

15. Anlage zur Speicherung und Wiedergewinnung von elektrischer Energie nach einem der Ansprüche 1 bis 14, **dadurch gekennzeichnet, daß** das zweite poröse feuerfeste Material von Ton aus erstem Brennvorgang gebildet ist.

16. Anlage zur Speicherung und Wiedergewinnung von elektrischer Energie nach einem der Ansprüche 1 bis 15, **da-**

**durch gekennzeichnet, daß** der erste und der zweite Raum jeweils ein Volumen von wenigstens 5000 m$^3$, vorzugsweise von 10.000 bis 45.000 m$^3$ aufweisen.

17. Verfahren zur Speicherung von elektrischer Energie (E1) in Form von Wärmeenergie, wobei eine Anlage nach einem der Ansprüche 1 bis 16 verwendet wird, **dadurch gekennzeichnet, daß** nach einem Anfangsschritt des Vorheizens des Gases des zweiten Raums, das auf eine Temperatur $T_2$ erhitzt wird, wobei die Anlage mit einem anfangs auf Umgebungstemperatur $T_0$ befindlichen Permanentgas gefüllt ist, die aufeinanderfolgenden Schritte durchgeführt werden, bei denen:

1) das aus dem oberen Ende ($2_1$) des zweiten Raums (2) mit einer Temperatur $T_2$ austretende Gas durch Komprimieren in einem ersten Verdichter (3b) auf eine oberhalb einer Temperatur $T_2$ liegende Temperatur $T_1$ erhitzt wird, bevor es zu dem oberen Ende ($1_1$) des ersten Raums geleitet wird, in dem sich ein Druck P1, welcher höher als der Druck P2 des zweiten Raums ist, einstellt, wobei der erste Verdichter (3b) durch einen mit der zu speichernden elektrischen Energie (E1) gespeisten ersten Elektromotor (3a) angetrieben wird, und

2) das Gas den ersten Raum zwischen dem oberen Ende ($1_1$) und seinem unteren Ende ($1_2$) vollständig durchquert und es aus dem unteren Ende ($1_2$) des ersten Raums mit einer Umgebungstemperatur T0 oder einer Temperatur T'1, die oberhalb von T0, aber unterhalb von T2 liegt, wieder austritt, und

3) das Gas anschließend mit Hilfe von Gasabkühlmitteln (6), vorzugsweise vom Typ Wärmetauscher, nach dem Ausgang des unteren Endes ($1_2$) des ersten Raums gegebenenfalls auf eine Umgebungstemperatur T0 abgekühlt wird, und

4) das Gas dann durch eine erste Turbine (3c), die vorzugsweise durch den ersten Verdichter (3b) angetrieben wird, auf den Druck P2 des zweiten Raums, welcher geringer als der Druck P1 ist, entspannt wird, wodurch das Gas auf eine Temperatur T3 unterhalb von T0 abgekühlt ist, bevor es in den zweiten Raum über dessen unteres Ende ($2_2$) eintritt, und

5) man das Gas zwischen dem unteren Ende ($2_2$) und dem oberen Ende ($2_1$) des zweiten Raums durch den zweiten Raum zirkulieren läßt, was bewirkt, daß das Volumen des feuerfesten Materials des auf die Temperatur T3 gekühlten unteren Teils (2b) des zweiten Raums vergrößert wird und daß das seines oberen Teils (2a) mit der Temperatur T2 oder T'2, welche unterhalb von T2, aber oberhalb von T0 und T'1 liegt, verringert wird, und, falls erforderlich, das aus dem zweiten Raum mit der Temperatur T'2 austretende Gas mit Hilfe von zweiten Gaserhitzungsmitteln (5b) auf die Temperatur T2 erhitzt wird, und

6) die obigen Schritte 1) bis 5) wiederholt werden, bis der auf die Temperatur T1 erhitzte obere Teil (1a) des ersten Raums wenigstens 80 % des Volumens des ersten Raums einnimmt und bis der auf die Temperatur T3 abgekühlte untere Teil (2b) des zweiten Raums wenigstens 80 % des Volumens des zweiten Raums einnimmt.

18. Verfahren nach Anspruch 17, **dadurch gekennzeichnet, daß** bei Schritt 6) die Speicherung unterbrochen wird, so daß der untere Teil (1b) des ersten Raums mit der Temperatur T'1 wenigstens 10 % des Volumens des ersten Raums, vorzugsweise 10 bis 20 % des Volumens des ersten Raums ausmacht, und/oder der obere Teil (2a) des zweiten Raums mit der Temperatur T2 weniger als 20 %, vorzugsweise 10 bis 20 % des Volumens des zweiten Raums ausmacht.

19. Verfahren nach einem der Ansprüche 17 oder 18, **dadurch gekennzeichnet, daß** die Temperaturen T1 und T2 derart sind, daß T1/T2 = 1,5 zu 3 und T1/T0 größer als 2, vorzugsweise größer als 3 und weiterhin vorzugsweise kleiner als 6 ist und P1/P2 2 zu 4 beträgt.

20. Verfahren nach einem der Ansprüche 17 bis 19, **dadurch gekennzeichnet, daß** T1 750 °C bis 2000 °C, vorzugsweise 1000 bis 1500 °C beträgt und T2 400 bis 1000 °C, vorzugsweise 500 bis 700 °C beträgt.

21. Verfahren nach Anspruch 19 oder 20, **dadurch gekennzeichnet, daß** der Druck P1 2 bis 4 bar absolut (2.10$^5$ bis 4.10$^5$ Pa) beträgt und P2 0,5 bis 1,5 bar absolut (0,5.10$^5$ bis 1,5.10$^5$ Pa) beträgt.

22. Verfahren nach einem der Ansprüche 17 bis 21, **dadurch gekennzeichnet, daß** T0 10 ° bis 50 °C und T3 -80 °C bis -20 °C beträgt, wobei T'1 gegebenenfalls 20 ° bis 150 °C beträgt.

23. Verfahren nach einem der Ansprüche 17 bis 21, **dadurch gekennzeichnet, daß** eine Menge an elektrischer Energie von 20 MW-hr bis 10.000 MW-hr gespeichert wird.

24. Verfahren zur Wiedergewinnung einer elektrischen Energie (ER) aus einer mittels eines Verfahrens nach einem der Ansprüche 17 bis 23 gespeicherten Wärmeenergie, **dadurch gekennzeichnet, daß** nach einer anfänglichen Startphase, in der der zweite Verdichter (4b) und die zweite Turbine (4c) mit dem Hilfselektromotor (4d) angetrieben werden, wobei während der Anfangsphase ein Druckgradient zwischen dem Druck P'1 des ersten Raums und einem Druck P'2 kleiner als P'1 des zweiten Raums aufgebaut wird, welcher derart ist, daß P'1 größer ist als P'2, wobei vorzugsweise P'1 größer ist als P1 und P'2 kleiner ist als P2, die aufeinanderfolgenden Schritte durchgeführt werden, bei denen:

1) das über das obere Ende ($1_1$) des ersten Raums (1) mit der Temperatur T1 austretende Gas durch die zweite Turbine (4c) entspannt und auf die Temperatur T2 abgekühlt wird, und die zweite Turbine (4c) einen Stromgenerator (4a) antreibt, der ermöglicht, eine zurückgewonnene elektrische Energie (ER) bereitzustellen, und

2) das Gas den zweiten Raum von seinem oberen Ende ($2_1$) bis zu seinem unteren Ende ($2_2$) durchströmt, wobei ein oberer Teil (2a) des zweiten Raums auf die Temperatur T2 erhitzt wird, wobei ein unterer Teil (2b) des zweiten Raums auf der Temperatur T3 bleibt, und

3) das Gas, welches aus dem unteren Ende ($2_2$) des zweiten Raums, an seinem unteren Ende ($2_2$) mit der Temperatur T3 austritt, anschließend durch Durchlaufen des zweiten Verdichters (4b), der vorzugsweise durch die über die zweite Turbine (4c) freigesetzte Energie angetrieben wird, komprimiert wird, um es auf eine Temperatur T4 oberhalb einer Umgebungstemperatur T0 und gegebenenfalls oberhalb von T'1, aber unterhalb von T2 am Ausgang des zweiten Verdichters (4b) zu erhitzen, und

4) vorzugsweise das Gas dann mit Hilfe von Kühlmitteln (6) auf die Umgebungstemperatur T0 oder T'1 abgekühlt wird, bevor es in den ersten Raum (1) über sein unteres Ende ($1_2$) eingeleitet wird, um wieder in den unteren Teil (1b) des ersten Raums, der sich auf der Temperatur T'1 befindet, zu gelangen, und

5) man das Gas durch den ersten Raum zirkulieren läßt, was bewirkt, daß das Volumen des feuerfesten Materials des unteren Teils (1b) mit der Temperatur T'1 vergrößert wird und daß das Volumen des feuerfesten Materials des oberen Teils (1a) mit der heißen Temperatur T1 verringert wird, und

6) die obigen Schritte 1) bis 5) wiederholt werden, bis der untere Teil (1b) des ersten Raums mit der Temperatur T1 wenigstens 80 % des Volumens des ersten Raums ausmacht und bis der obere Teil (2a) des zweiten Raums mit der Temperatur T2 wenigstens 80 Vol.-% des zweiten Raums ausmacht.

25. Verfahren nach Anspruch 24, **dadurch gekennzeichnet, daß** bei Schritt 6) das Energiewiedergewinnungsverfahren unterbrochen wird, so daß ein oberer Teil (1a) des ersten Raums auf einer Temperatur T1 gehalten wird, wobei der obere Teil (1a) weniger als 20 Vol.-%, vorzugsweise 10 bis 20 Vol.-%, des ersten Raums ausmacht, und/oder ein unterer Teil (2b) des zweiten Raums mit der kalten Temperatur T3 weniger als 20 %, vorzugsweise 10 bis 20 % des Volumens des zweiten Raums ausmacht.

26. Verfahren nach einem der Ansprüche 24 oder 25, **dadurch gekennzeichnet, daß** der Wirkungsgrad der Wiedergewinnung von elektrischer Energie durch den Stromgenerator (4a) $E_R/E_1$ über 60 % liegt, vorzugsweise 75 bis 85% beträgt.

27. Verfahren nach einem der Ansprüche 24 bis 26, **dadurch gekennzeichnet, daß** P'1/P'2 3 zu 5 beträgt.

28. Verfahren nach einem der Ansprüche 24 bis 27, **dadurch gekennzeichnet, daß** T4 150 bis 400 °C beträgt.

29. Verfahren nach einem der Ansprüche 24 bis 28, **dadurch gekennzeichnet, daß** der Druck P'1 3 bis 5 bar absolut ($3.10^5$ bis $5.10^5$ Pa) beträgt und P'2 1 bis 1,5 bar absolut ($1.10^5$ bis $1,5.10^5$ Pa) beträgt.

**Claims**

1. An installation for storing and returning electrical energy, the installation being **characterized in that** it comprises:

   • first and second enclosures (1, 2) containing a gas and first and second porous refractory materials (11) suitable for transferring heat by contact between said porous refractory materials and a gas flowing through said enclosures; and

   • a closed circuit of pipes (1c, 1c', 2c, 2c', 1d, 1d', 2d, 2d') enabling a gas to pass successively through each of the two enclosures from one end to the other; and

   • compressor means (3b, 4b) and expander means (3c, 4c) for compressing and expanding the gas flowing in said pipes between each of the ends of an enclosure connected to an end of the other enclosure; and

   • preferably, first gas heater means suitable for heating the gas flowing in said second enclosure (5a); and

   • also preferably, cooler means (6) for cooling the gas flowing between one of the ends of the first enclosure and said compressor means (4b) and expander means (3c), suitable for cooling the gas leaving said first enclosure at said end prior to being expanded in said expander means (3c), or respectively the gas entering into said first enclosure after being compressed by said compressor means (4b).

2. An installation for storing and returning energy according to claim 1, **characterized in that** it comprises:

A) a first lagged enclosure (1) filled with a first porous refractory material suitable for passing a gas flowing through said first enclosure between top and bottom ends ($1_1$, $1_2$) of said first enclosure; and

B) a second lagged enclosure (2) filled with a second porous refractory material suitable for passing a gas flowing through said second enclosure between top and bottom ends of said second enclosure ($2_1$, $2_2$); and

C) lagged pipes (1c, 1c', 2c, 2c', 1d, 1d', 2d, 2d') enabling the gas to flow in a closed circuit between the two enclosures, the pipes comprising first and second top pipes (1d- 1d', 2d-2d') between the top ends ($1_1$, $2_1$) of the two enclosures, and first and second bottom pipes (1c-1c', 2c-2c') between the bottom ends ($1_2$, $2_2$) of the two enclosures; and

D) preferably, first gas heater means (5a) suitable for heating a gas inside said second enclosure; and

E) first gas compressor means (3) comprising an electric motor (3a) suitable for being fed with electrical energy (E1) for storing to actuate a first compressor (3b) suitable for compressing a gas coming from said top end ($2_1$) of the second enclosure via a said second top pipe (2d) to deliver it to said top end ($1_1$) of the first enclosure via a said first top pipe (1d); and

F) first gas expander means (3c) comprising a first turbine (3c) suitable for expanding the gas coming from said bottom end ($1_2$) of the first enclosure via a first bottom pipe (1c) to deliver it to said bottom end ($2_2$) of the second enclosure via second bottom pipe (2c); and

G) second gas compressor means (4b) suitable for compressing the gas coming from said bottom end ($2_2$) of the second enclosure via another second bottom pipe (2c, 2c') to deliver it to said bottom end ($1_2$) of the first enclosure via another first bottom pipe (1c, 1c'); and

H) second gas expander means comprising a second turbine (4c) suitable for expanding the gas coming from said top end ($1_1$) of the first enclosure via another first top pipe (1d, 1d') to deliver it to said top end ($2_1$) of the second enclosure via another second top pipe (2d, 2d'), said second expander means being suitable for actuating an electricity generator (4a) suitable for returning the electrical energy ($E_R$); and

I) gas cooler means, preferably a heat exchanger (6) suitable for cooling the gas flowing in said first bottom pipe (1c, 1c') between firstly the bottom end ($1_2$) of the first enclosure and secondly the outlet and inlet of said second compressor (4b) and said first turbine (3c), respectively.

3. An installation for storing and returning energy according to claim 2, **characterized in that** it includes second gas heater means (5b) suitable for heating the gas flowing in a said second top pipe (2d) between the top end of said second enclosure and said first compressor (3b).

4. An installation for storing and returning energy according to claim 2 or claim 3, **characterized in that** said first turbine (3c) is suitable for being actuated by said first compressor (3b) to which it is mechanically coupled.

5. An installation for storing and returning energy according to any one of claims 2 to 4, **characterized in that** said second turbine (4c) is coupled to an auxiliary electric motor (4d) suitable for driving it.

6. An installation for storing and returning energy according to any one of claims 2 to 5, **characterized in that** said second compressor (4b) is actuated by said second turbine (4c) to which it is mechanically coupled.

7. An installation for storing and returning energy according to any one of claims 1 to 6, **characterized in that** it is filled with an inert gas, preferably argon.

8. An installation for storing and returning energy according to any one of claims 2 to 7, **characterized in that** said first enclosure and the first porous refractory material are capable of withstanding a temperature T1 of at least 750°C, preferably lying in the range 750°C to 2000°C, more preferably 1000°C to 1500°C, and said second turbine is dimensioned to expand a gas at said temperature T1, while said first turbine, of smaller capacity than the second turbine, is dimensioned to expand the gas from ambient temperature T0 to a temperature T3 in the range -80°C to -20°C.

9. An installation for storing and returning energy according to any one of claims 2 to 8, **characterized in that** said second enclosure and second porous refractory material are capable of withstanding a temperature T2 of at least 400°C, preferably lying in the range 400°C to 1000°C, more preferably 500°C to 700°C, and said first compressor is dimensioned to compress a gas at said temperature T2, while said second compressor, of smaller capacity than the first compressor, is dimensioned to compress the gas at a temperature T3 in the range -80°C to -20°C to ambient temperature.

10. An installation for storing and returning energy according to any one of claims 2 to 9, **characterized in that** said first compressor is suitable for delivering at a volume flow rate greater than said first turbine, and said second turbine is suitable for delivering a volume flow rate greater than said second compressor, and said first compressor and second turbine are made of carbon.

11. An installation for storing and returning energy according to any one of claims 1 to 10, **characterized in that** said first and second porous refractory materials present porosities lying in the range 20% to 60%.

12. An installation for storing and returning energy according to claim 11, **characterized in that** said first and second porous refractory materials are constituted by porous bricks (11) assembled one against another, preferably having cylindrical perforations ($11_1$) passing therethrough that are disposed parallel in a common longitudinal direction that is the longitudinal direction of the enclosure in which they are assembled, said perforations more preferably being of a diameter in the range 5 mm to 20 mm.

13. An installation for storing and returning energy according to any one of claims 1 to 12, **characterized in that** said first and second porous refractory materials are constituted by fire clay having high contents of compounds selected from magnesia, alumina, and lime.

14. An installation for storing and returning energy according to any one of claims 1 to 13, **characterized in that** said first porous refractory material is constituted by second-firing fire clay or chamotte.

15. An installation for storing and returning energy according to any one of claims 1 to 14, **characterized in that** said second porous refractory material is constituted by first-firing fire clay.

16. An installation for storing and returning energy according to any one of claims 1 to 15, **characterized in that** said first and second enclosures have respective volumes of not less than 5000 m$^3$, and preferably lying in the range 10,000 m$^3$ to 45,000 m$^3$.

17. A method of storing electrical energy (E1) in the form of heat energy, in which an installation according to any one of claims 1 to 16 is used, the method being **characterized in that**, after an initial step of preheating the gas of said second enclosure that is heated to a temperature $T_2$, said installation being filled with a permanent gas that is initially at ambient temperature $T_0$, the following successive steps are performed:

1) the gas leaving the top end ($2_1$) of the second enclosure (2) at a temperature $T_2$ is heated to a temperature $T_1$ higher than a temperature $T_2$ by being compressed in a said first compressor (3b) before being delivered to the top end ($1_1$) of said first enclosure, in which a pressure P1 is established higher than the pressure P2 of the second enclosure, said first compressor (3b) being driven by a first electric motor (3a) powered by the electrical energy (E1) that is to be stored; and

2) the gas passes right through said first enclosure between said top end ($1_1$) and its said bottom end ($1_2$), and it leaves said bottom end ($1_2$) of the first enclosure at an ambient temperature T0 or a temperature T'1 greater than T0 but less than T2; and

3) the gas is then cooled, where appropriate, to an ambient temperature T0 by said gas cooler means (6), preferably of the heat exchanger type, located downstream from the outlet of the bottom end ($1_2$) of the first enclosure; and

4) the gas is then expanded through a said first turbine (3c), preferably driven by said first compressor (3b), to said pressure P2 of the second enclosure that is lower than the pressure P1, the gas thus being cooled to a temperature T3 lower than T0 prior to entering into said second enclosure via its bottom end ($2_2$); and

5) the gas is caused to flow through said second enclosure between said bottom and top ends ($2_2$, $2_1$) of the second enclosure, thereby having the effect of increasing the volume of the refractory material in the bottom portion (2b) of said second enclosure that is cooled to the temperature T3, and of decreasing the volume of its top portion (2a) that is at the temperature T2 or T'2 lower than T2 but greater than T0 and T'1, and if necessary, where appropriate, the gas leaving the second enclosure at the temperature T'2 is heated to the temperature T2 with the help of second gas heater means (5b); and

6) above steps 1) to 5) are repeated until the top portion (1a) of the first enclosure heated to the temperature T1 occupies at least 80% of the volume of said first enclosure, and the bottom portion (2b) of the second enclosure cools to a temperature T3 occupying at least 80% of the volume of the second enclosure.

18. A method according to claim 17, **characterized in that**, in step 6), storage is interrupted so that the bottom portion (1b) of the first enclosure at said temperature T'1 represents at least 10% of the volume of the first enclosure, preferably 10% to 20% of the volume of the first enclosure, and/or the top portion (2a) of the second enclosure at the temperature (T2) represents less than 20%, preferably 10% to 20% of the volume of said second enclosure.

19. A method according to claim 17 or claim 18, **characterized in that** said temperatures T1 and T2 are such that T1/T2 = 1.5 to 3 and T1/T0 is greater than 2, preferably greater than 3, and more preferably less than 6, and P1/P2 lies in the range 2 to 4.

20. A method according to any one of claims 17 to 19, **characterized in that** T1 is 750°C to 2000°C, preferably 1000°C to 1500°C, and T2 is 400°C to 1000°C, preferably 500°C to 700°C.

21. A method according to claim 19 or claim 20, **characterized in that** the pressure P1 lies in the range 2 to 4 bars absolute ($2 \times 10^5$ Pa to $4 \times 10^5$ Pa), and the pressure P2 lies in the range 0.5 to 1.5 bars absolute ($0.5 \times 10^5$ Pa to $1.5 \times 10^5$ Pa).

22. A method according to any one of claims 17 to 21, **characterized in that** T0 lies in the range 10°C to 50°C and T3 lies in the range -80°C to -20°C, T1' lying in the range 20°C to 150°C, where appropriate.

23. A method according to any of claims 17 to 21, **characterized in that** the quantity of electrical energy stored lies in the range 20 MWh to 10,000 MWh.

24. A method of returning electrical energy ($E_R$) from heat energy stored by a method according to any one of claims 17 to 23, the method being **characterized in that**, after an initial starting stage in which said second compressor (4b) and said second turbine (4c) are driven by the said auxiliary electric motor (4d), during which initial stage a pressure gradient is established between the pressure P'1 in the first enclosure and a pressure P'2 less P'1 in the second enclosure, such that P'1 is greater than P'2, P'1 preferably being greater than P1 and P'2 preferably being less than P2, the following successive steps are performed:

1) the gas leaving via the top end ($1_1$) of the first enclosure (1) at said temperature T1 is expanded and cooled to the temperature T2 through the second turbine (4c), and said second turbine (4c) actuates a said electricity generator (4a) enabling returned electrical energy ($E_R$) to be delivered; and
2) the gas passes through said second enclosure from its top end ($2_1$) to its bottom end ($2_2$), a top portion (2a) of the second enclosure being heated to said temperature T2, a bottom portion (2b) of the second enclosure remaining at said temperature T3; and
3) the gas leaving the bottom end ($2_2$) of said second enclosure at the temperature T3 is then compressed by passing through said second compressor (4b) that is preferably actuated by the energy released by the second turbine (4c) so as to be heated to a temperature T4 greater than an ambient temperature T0 and where appropriate greater than T'1, but less than T2, at the outlet from said second compressor (4b); and
4) preferably, the gas is then cooled to the ambient temperature T0 or T'1 by said cooler means (6) prior to being introduced into said first enclosure (1) by its bottom end ($1_2$) to enter the bottom portion (1b) of said first enclosure which is at said temperature T'1; and
5) the gas is caused to flow through said first enclosure, thereby having the effect of increasing the volume of refractory material in the bottom portion (1b) that is at said temperature T'1 and of decreasing the volume of refractory material in the top portion (1a) that is at said hot temperature T1; and
6) above steps 1) to 5) are repeated until the bottom portion (1b) of the first enclosure at said temperature (T1) represents at least 80% of the volume of the first enclosure, and the top portion (2a) of said second enclosure at said temperature (T2) represents at least 80% of the volume of said second enclosure.

25. A method according to claim 24, **characterized in that**, in step 6), the energy return method is interrupted so as to maintain a top portion (1a) of the first enclosure at a said temperature T1, said top portion (1a) representing less than 20%, preferably 10% to 20% of the volume of said first enclosure, and/or a bottom portion (2b) of the second enclosure at said cold temperature T3 represents less than 20%, preferably 10% to 20%, of the volume of the second enclosure.

26. A method according to claim 24 or claim 25, **characterized in that** the efficiency $E_R/E_1$ with which electrical energy is returned by said electricity generator (4a) is greater than 60%, and preferably lies in the range 75% to 85%.

27. A method according to any one of claims 24 to 26, **characterized in that** the ratio P'1/P'2 lies in the range 3 to 5.

28. A method according to any one of claims 24 to 27, **characterized in that** T4 lies in the range 150°C to 400°C.

29. A method according to any one of claims 24 to 28, **characterized in that** the pressure P'1 lies in the range 3 to 5 bars absolute ($3 \times 10^5$ Pa to $5 \times 10^5$ Pa) and P'2 lies in the range 1 to 1.5 bars absolute ($1 \times 10^5$ Pa to $1.5 \times 10^5$ Pa).

FIG.1

EP 2 147 193 B1

FIG.2

EP 2 147 193 B1

FIG.3A

FIG.3B

FIG.3

# FIG.4

# FIG.5

# FIG.6

FIG.7          FIG.7A          FIG.7B

EP 2 147 193 B1

## RÉFÉRENCES CITÉES DANS LA DESCRIPTION

**Documents brevets cités dans la description**

- WO 2005108758 A

- WO 20060721185 A